# EUROPEAN PATENT APPLICATION

(11) **EP 1 699 185 A1**
(43) Date of publication of application: **06.09.2006**
(21) Application number: 05703801.0
(22) Date of filing: 19.01.2005
(51) Int. Cl.: H04L 12/56

(54) **COMMUNICATION SYSTEM, INFORMATION PROCESSING SYSTEM, INFORMATION PROCESSING APPARATUS, TUNNEL MANAGEMENT APPARATUS, INFORMATION PROCESSING METHOD, TUNNEL MANAGEMENT METHOD, AND PROGRAM**

(30) Priority: 30.01.2004 JP 2004022903
(71) Applicant: Matsushita Electric Industries Co., Ltd., Kadoma-shi, Osaka 571-8501 (JP)
(72) Inventor: MAEKAWA, Hajime c/o Matsushita El.Ind.Co.Ltd., 1-3-7 Shiromi, Chuo-ku, Osaka 540-6319 (JP); IKEDA, Takumi c/o Matsushita El. Ind. Co.Ltd., 1-3-7 Shiromi, Chuo-ku, Osaka 540-6319 (JP)
(74) Representative: Grünecker, Kinkeldey, Stockmair & Schwanhäusser Anwaltssozietät
(86) International application number: PCT/JP2005/000564
(87) International publication number: WO 2005/074207

(57) **Abstract**

A tunnel managing apparatus (4) is provided for managing a tunnel communication data for conducting a tunnel communication between a first data processing apparatus (1) and a second data processing apparatus (2). According to the tunnel communication data, a sustain data for sustaining the tunnel communication is transmitted to the first data processing apparatus (1). The first data processing apparatus (1) then controls the tunnel communication with the second data processing apparatus (2) in response to the sustain data received from the tunnel managing apparatus (4). Accordingly, a communications system can be provided for controlling the tunnel communication with no use of any communication controlling server.

## Description

### Field of the Invention

The present invention relates to a communications system for communicating between two or more data processing apparatuses.

### Background of the Invention

A network system of server/client type has been known for allowing communications between a server and clients.

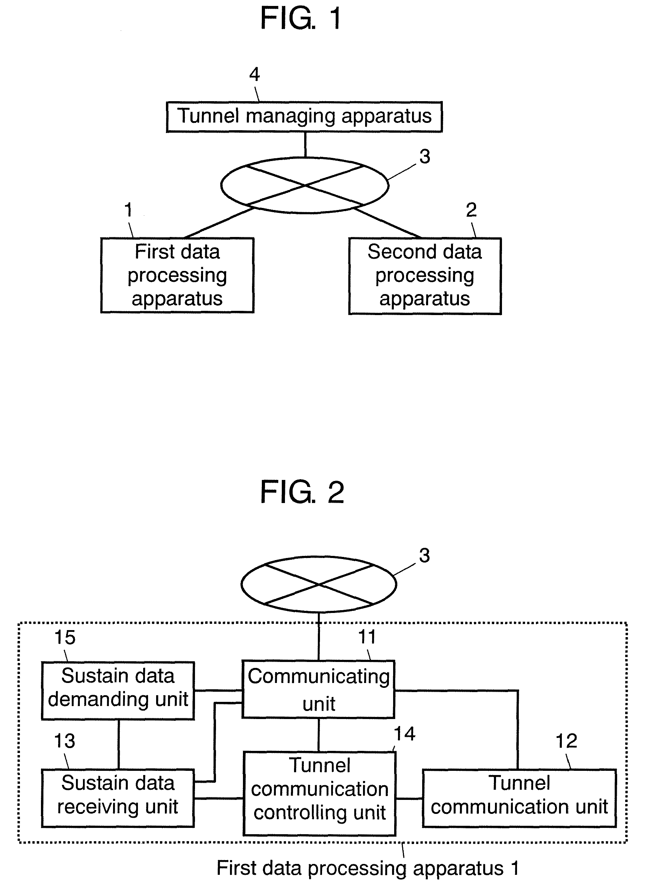

There has also been developed a method of communicating between data processing apparatuses with no use of servers, such as disclosed in Japanese Patent Laid-open Publication No.2003-244188 (page 1 and Fig. 1).

However, the communication through non of servers disallows a third person or party to involve except the two participants and can thus be controlled by not the third party but the two participants. It is highly probable that even if any illegal action is introduced, the communication may hardly be canceled on the instance. Also, as the communication remains unknown how long it continued, it can hardly be charged by the third party.

### Summary of the Invention

The present invention has been developed for overcoming the foregoing drawbacks and its object is to provide a communications system which can control the communication through no servers.

For achievement of the above object, a data processing apparatus according to the present invention is provided comprising a tunnel communication unit for conducting a tunnel communication, a sustain data receiving unit for receiving a sustain data for sustaining the tunnel communication, and a tunnel communication controlling unit for controlling the tunnel communication conduced by the tunnel communication unit in response to the sustain data received by the sustain data receiving unit.

In action, the data processing apparatus can control the tunnel communication conducted by the tunnel communication unit with the use of a sustain data.

A tunnel managing apparatus according to the present invention is also provided comprising a tunnel communication data managing unit for managing a tunnel communication data for conducting a tunnel communication between two or more apparatuses and a sustain data transmitting unit for, in response to the tunnel communication data, transmitting a sustain data for sustaining the tunnel communication to the apparatus conducting the tunnel communication.

In action, the tunnel managing apparatus can allow the sustain data to be transmitted for determining whether the tunnel communication is sustained or not.

Moreover, a data processing system according to the present invention is provided comprising a tunnel managing apparatus and an access apparatus. The access apparatus includes a first demand receiving unit for receiving a demand for transmission of a sustain data for sustaining a tunnel communication between two or more processing apparatuses, a demand transmitting unit for transmitting the demand for transmission to the tunnel managing apparatus when the first demanding receiving unit receives the demand for transmission, a sustain data receiving unit for receiving the sustain data from the tunnel managing apparatus, and a first sustain data transmitting unit for transmitting the sustain data when the sustain data receiving unit receives the sustain data. The tunnel managing apparatus includes a tunnel communication data managing unit for managing a tunnel communication data about the tunnel communication, a second demand receiving unit for receiving the demand for transmission from the access apparatus, and a second sustain data transmitting unit for transmitting the sustain data to the access apparatus in response to the tunnel communication data when the second demand receiving unit receives the demand for transmission.

In action, the data processing system can allow the sustain data to be transmitted for determining whether the tunnel communication is sustained or not.

### Brief Description of the Drawings

Fig. 1 is a schematic view of a communications system showing Embodiment 1 of the present invention.
Fig. 2 is a block diagram of a first data processing apparatus provided in Embodiment 1.
Fig. 3 is a block diagram of a second data processing apparatus provided in Embodiment 1.
Fig. 4 is a block diagram of a tunnel managing apparatus provided in Embodiment 1.
Fig. 5 is a flowchart showing an action of the first data processing apparatus in Embodiment 1.
Fig. 6 is a flowchart showing an action of the tunnel managing apparatus in Embodiment 1.
Fig. 7 illustrates an example of user data employed in Embodiment 1.
Fig. 8A illustrates an example of tunnel communication data employed in Embodiment 1.
Fig. 8B illustrates another exemplary form of the tunnel communication data in Embodiment 1.
Fig. 8C illustrates a further exemplary form of the tunnel communication data employed in Embodiment 1.
Fig. 9 illustrates an example of demand data employed in Embodiment 1.
Fig. 10 illustrates another example of tunnel communication data employed in Embodiment 1.
Fig. 11 is a flowchart showing an action of the first data processing apparatus provided in Embodiment 2 of the present invention.
Fig. 12 is a flowchart showing an action of the tunnel managing apparatus provided in Embodiment 2.
Fig. 13A illustrates an example of the tunnel communication data employed in Embodiment 2.
Fig. 13B illustrates another exemplary form of the tunnel communication data in Embodiment 2.
Fig. 13C illustrates a further exemplary form of the tunnel communication data employed in Embodiment 2.
Fig. 13D illustrates another example of the tunnel communication data employed in Embodiment 2.
Fig. 14 illustrates a further example of the tunnel communication data employed in Embodiment 2.
Fig. 15 is a block diagram of the first data processing apparatus showing Embodiment 3 of the present invention.
Fig. 16 is a block diagram of the tunnel managing apparatus provided in Embodiment 3.
Fig. 17 is a flowchart showing an action of the first data processing apparatus provided in Embodiment 3.
Fig. 18 is a flowchart showing an action of the tunnel managing apparatus provided in Embodiment 3.
Fig. 19 illustrates an example of table provided in Embodiment 3 showing the relationship between a user identifier and the number of credit card No..
Fig. 20 illustrates an example of the tunnel communication data provided in Embodiment 3.
Fig. 21 is a schematic view of a communications system according to Embodiment 4 of the present invention.
Fig. 22 is a block diagram of an access apparatus provided in Embodiment 4.
Fig. 23 is a block diagram of a tunnel managing apparatus provided in Embodiment 4.
Fig. 24 is a flowchart showing an action of the access apparatus provided in Embodiment 4.
Fig. 25 is a flowchart showing an action of the tunnel managing apparatus provided in Embodiment 4.

### Detailed description of preferred embodiments

### (Embodiment 1)

A communications system according to Embodiment 1 of the present invention will be described referring to the relevant drawings.

Fig. 1 illustrates an arrangement of the communications system of Embodiment 1. As shown in Fig. 1, the communications system of Embodiment 1 comprises a first data processing apparatus 1, a second data processing apparatus 2, and a tunnel managing apparatus 4. The first data processing apparatus 1, the second data processing apparatus 2, and the tunnel managing apparatus 4 are connected together by a communications network 3 of wireless or wired type. The communications network 3 may be implemented by the Internet.

Fig. 2 is a block diagram of the first data processing apparatus 1 in Embodiment 1. As shown in Fig. 2, the first data processing apparatus 1 comprises a communicating unit 11, a tunnel communication unit 12, a sustain data receiving unit 13, a tunnel communication controlling unit 14, and a sustain data demanding unit 15.

The communicating unit 11 is connected to the communications network 3 for allowing each unit (for example, the tunnel communication controlling unit 14 or the sustain data receiving unit 13) in the first data processing apparatus 1 to communicate with the second data processing apparatus 2 and the tunnel managing apparatus 4.

The tunnel communication unit 12 is provided for tunnel communication with the second data processing apparatus 2. The tunnel communication means a peer-to-peer communication between two peripherals over a logic transmission line. For example, the communication may be carried out at the IP level or HTTP mode. The communication may be over a virtual circuit or a datagram. The peer-to-peer communication in this embodiment is based on two logic events. One is the administration function (in the tunnel controlling unit 4) for managing the network, the duration of tunnel communications, the finding of a target in a directory, and so on. The other is the application function (in the first data processing apparatus 1 and the second data processing apparatus 2) for executing multiple administration functions. The tunnel communication is executed between two parties of applications independently of the other parties. In practice, the administration function may be provided as a server excluding or including the application function. It is assumed in this embodiment that the administration function is separated from the application function. The tunnel communication in this embodiment may be carried out through any server other than the administration server. For example, a proxy server may intercede in the tunnel communication. In the tunnel communication, data may be capsulated or not. The capsulation of data means encapsulating the data with a protocol specified header. Alternatively, the data in the tunnel communication may be encrypted by such a manner as of VPN (virtual private network) or not. The tunnel communication may be selected from HTTP, UDP, L2TP, and SSH formats. The tunnel communication unit 12 and the communicating unit 11 may be combined to a single component. Alternatively, the tunnel communication unit 12 may include a communications device (e.g., a network card) or not. The tunnel communication unit 12 may be implemented by either a hardware or a software such as a driver for driving the communications device.

The sustain data receiving unit 13 is provided for receiving a sustain data via the communicating unit 11 from the tunnel managing apparatus 4. The sustain data is a data of sustaining the tunnel communication. The sustain data indicates whether the tunnel communication is sustained or not.

The tunnel communication controlling unit 14 is responsive to the sustain data received at the sustain data receiving unit 13 for controlling the tunnel communicating action of the tunnel communication unit 12. For example, when the sustain data indicates that the tunnel communication is not sustained, the tunnel communication controlling unit 14 directs the tunnel communication unit 12 to cancel the tunnel communication. The tunnel communication controlling unit 14 also carries out a process for setting up the tunnel communication. The setup of the tunnel communication means to conduct the tunnel communication.

The sustain data demanding unit 15 is provided for demanding the tunnel managing apparatus 4 of transmission of a sustain data. More particularly, the tunnel managing apparatus 4 upon receiving a demand from the sustain data demanding unit 15 supplies the sustain data demanding unit 15 with a sustain data. The demands may periodically be transmitted at equal intervals of a time (e.g., 10 minutes) as desired by the sustain data demanding unit 15. The sustain data may contain a (tunnel sustaining duration) data about a duration of sustaining the tunnel communication, thus allowing the tunnel communication to last for the duration. The sustain data may be equal in the tunnel sustaining duration or different depending on the types of the sustain data. The tunnel sustaining duration data may be contained in each sustain data or one of a series of the sustain data. The tunnel sustaining duration may also be used for the sustain data demanding unit 15 determining the transmission of a demand.

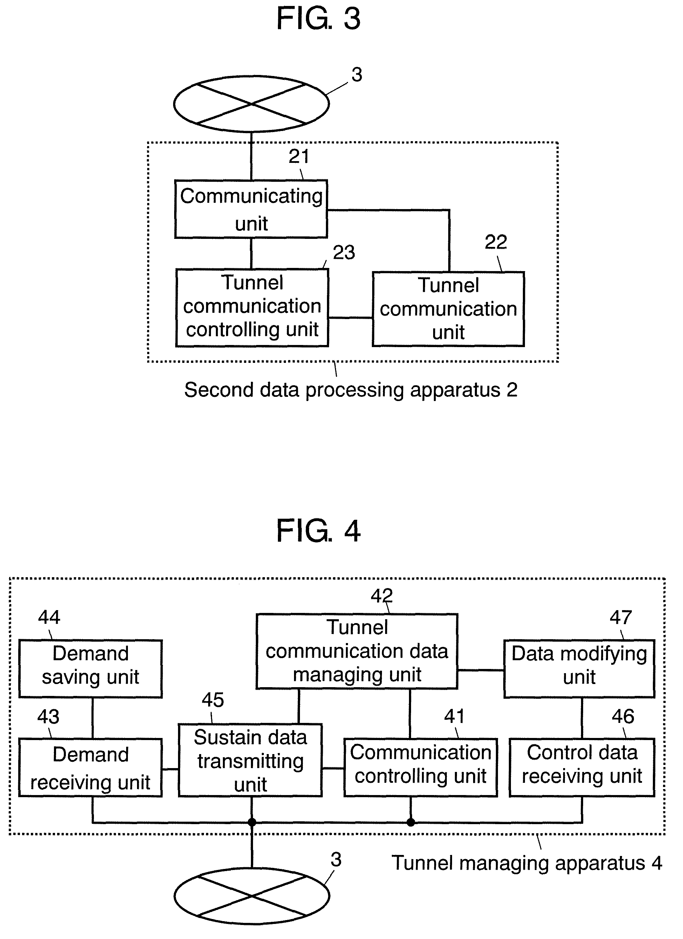

Fig. 3 is a block diagram of an arrangement of the second data processing apparatus 2 in this embodiment. As shown in Fig. 3, the second data processing apparatus 2 comprises a communicating unit 21, a tunnel communication unit 22, and a tunnel communication controlling unit 23. The communicating unit 21 and the tunnel communication unit 22 are identical to the communicating unit 11 and the tunnel communication unit 12 of the first data processing apparatus 1 and will be described in no more detail.

The tunnel communication controlling unit 23 is provided for allowing the tunnel communication unit 22 to set up the tunnel communication. When judging that the tunnel communication is not sustained, the tunnel communication controlling unit 23 directs the tunnel communication unit 22 to cancel the tunnel communication.

Fig. 4 is a block diagram of an arrangement of the tunnel managing apparatus 4 in this embodiment. As shown in Fig. 4, the tunnel managing apparatus 4 comprises a communication controlling unit 41, a tunnel communication data managing unit 42, a demand receiving unit 43, a demand saving unit 44, a sustain data transmitting unit 45, a control data receiving unit 46, and a data modifying unit 47.

The communication controlling unit 41 is provided for setting up the tunnel communication between the first data processing apparatus 1 and the second data processing apparatus 2. For example, the communication controlling unit 41 supplies the first data processing apparatus 1 with an address data indicative of the IP address for communicating with the second data processing apparatus 2.

The tunnel communication data managing unit 42 is provided for managing the tunnel communication. The tunnel communication data contains a data of the tunnel communication between peripherals. The tunnel communication data indicates whether the tunnel communication is sustained or not. The managing of the tunnel communication data includes storage of the tunnel communication data. The storage maybe implemented by a known recording medium (e.g., a semiconductor memory, a magnetic recording disk, or an optical recording disk). The storage may be either a temporal memory such as a RAM for temporarily saving the tunnel communication data received from an external storage device or a long-term memory such as a magnetic disk drive. Alternatively, the managing of the tunnel communication data may include updating of the tunnel communication data. The updating of the tunnel communication data may include conducting or deleting a record in the tunnel communication data or updating a time data (e.g., counting up or down the time) in the tunnel communication data with the use of a counting function. The counting up or down of time may be conducted by a clock or a timer.

The demand receiving unit 43 is provided for receiving a command for transmission from the first data processing apparatus 1 over the communications network 3. The demand for transmission is a request for receiving the sustain data. The transmission demand may contain a data for identifying the tunnel communication, whereby the sustain data can be received exactly of the tunnel communication. The data for identifying the tunnel communication may be an identifier for the tunnel communication or a device identifier assigned to the data processing apparatus conducting the tunnel communication. Alternatively, in case that the data processing apparatus conducting the tunnel communication and its IP address are defined at 1:1, the IP address may be used as the identifier. The device identifier may be selected from MAC address, EUI64 based address, or any other GUID (global unique ID). The demand receiving unit 43 upon receiving the transmission demand supplies the demand saving unit 44 with the data for identifying the tunnel communication. Simultaneously, the demand receiving unit 43 supplies the sustain data transmitting unit 45 with the data for identifying the tunnel communication, a command of transmitting the sustain data, and an address data indicative of the IP address of the peripheral from which the transmission demand is received. The IP address of the peripheral from which the transmission demand is received may be contained in the header of the transmission demand.

The demand saving unit 44 is provided for saving demand data of the transmission demand received at the demand receiving unit 43. The demand data includes the data for identifying the tunnel communication conducted by the peripheral or dataprocessing apparatus which has transmitted the transmission demand and a data for the time and date of the transmission demand. The data for the time and date of the transmission demand may be the time and date at the reception of the transmission demand at the demand receiving unit 43, the reception of a notice at the demand saving unit 44 of receiving the transmission demand, or at the transmission of the transmission demand from the peripheral (which are carried in the transmission demand). From the demand data, the transmission (or the reception) of the transmission demand for each tunnel communication can be acknowledged. Accordingly, the demand data may be a log carrying a data for which the tunnel communication is conducted.

The sustain data transmitting unit 45 is provided for supplying the peripheral conducting the tunnel communication with the sustain data about the tunnel communication according to the tunnel communication data. The sustain data may be generated from the tunnel communication data or may directly incorporate a portion of the tunnel communication data. The sustain data transmitting unit 45 may include a transmitter device (e.g., a network card) for conducting the transmission of the sustain data. The sustain data transmitting unit 45 may be implemented by either a hardware or a software such as a driver for driving the transmitter device.

The control data receiving unit 46 is provided for receiving a tunnel control data. The tunnel control data is a data for controlling the tunnel communication including, for example, a command of canceling a particular tunnel communication. The tunnel control data received by the control data receiving unit 46 may include an entry data produced by an entry device (e.g., a keyboard, a mouse, or a touch panel) and another data delivered over the communications network 3. It is assumed in this embodiment that the tunnel control data is a data received from the communications network 3. The tunnel control data received by the control data receiving unit 46 is then transferred to the data modifying unit 47.

The data modifying unit 47 is provided for modifying the tunnel communication data saved in the tunnel communication data managing unit 42 in response to the tunnel control data. As the tunnel communication data is modified by the data modifying unit 47, the tunnel communication can favorably be controlled (for example, canceled as desired). The modification of the tunnel communication data may be conducted directly by the datamodifying unit 47 or indirectly by a control command provided from the tunnel data managing unit 42.

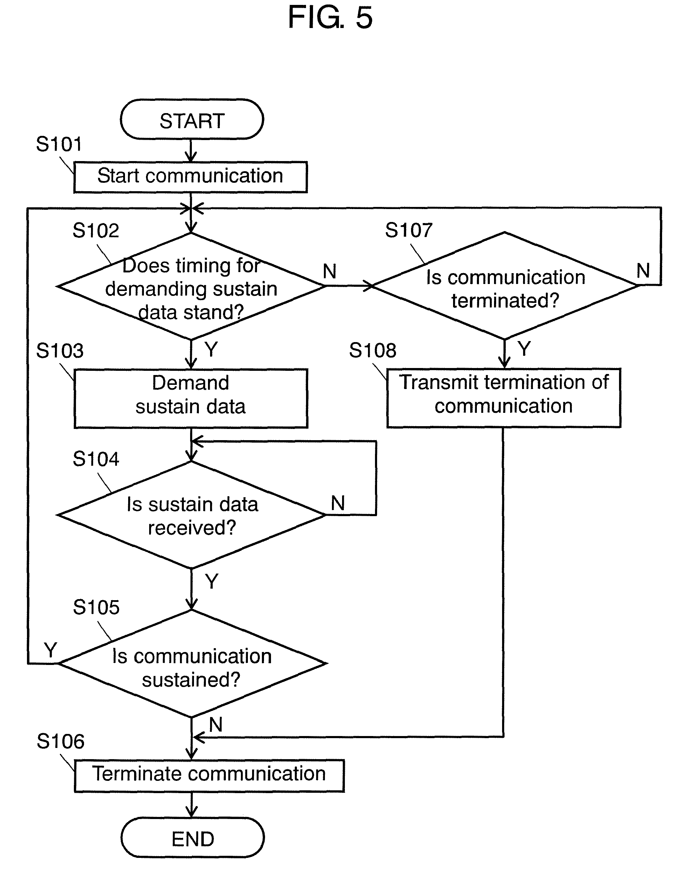

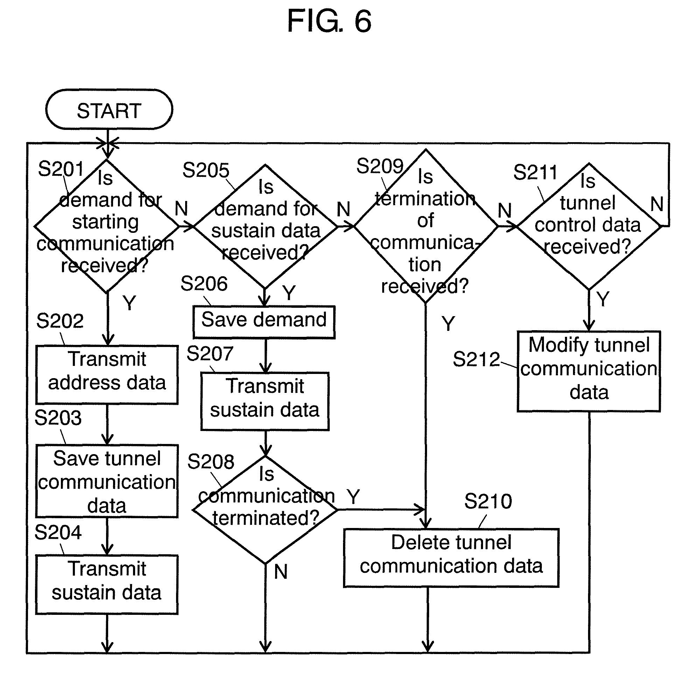

The action of the communications system of this embodiment will now be described referring to the flowcharts of Figs. 5 and 6. The flowchart of Fig. 5 illustrates the action of the first data processing apparatus 1 while the flowchart of Fig. 6 illustrates the action of the tunnel managing apparatus 4.

The flowchart of Fig. 5 is explained.

(Step S101) The tunnel communication controlling unit 14 transmits a demand for starting a tunnel communication from the communicating unit 11 to the tunnel managing apparatus 4. When the tunnel communication controlling unit 14 receives from the tunnel managing apparatus 4 an address data indicating the IP address of the second data processing apparatus 2, it starts the tunnel communication between the tunnel communication unit 12 and the tunnel communication unit 22 of the second data processing apparatus 2. Simultaneously, the sustain data receiving unit 13 receives a sustain data from the tunnel managing apparatus 4 and supplies the sustain data demanding unit 15 with its reception of the sustain data. In turn, the sustain data demanding unit 15 starts counting from then.

(Step S102) The sustain data demanding unit 15 examines the timing of demanding the sustain data. More particularly, it is examined whether the counting action has elapsed a given time or not from its start at Step S101. When the timing stands for demanding the sustain data, the procedure goes to Step S103. If not, the procedure moves to Step S107.

(Step S103) The sustain data demanding unit 15 transmits a transmission demand to the tunnel managing apparatus 4 for demanding the reception of the sustain data.

(Step S104) The sustain data receiving unit 13 then examined whether the sustain data is received or not. When the sustain data is received, the procedure goes to Step S105. If the sustain data is not received, the action of Step S104 is repeated until the sustain data is received.

(Step S105) When the sustain data indicates that the desired tunnel communication is sustainable, it is transferred from the sustain data receiving unit 13 to the sustain data demanding unit 15. The sustain data demanding unit 15 then resets the counting and starts the counting action from then. This is followed by returning to Step S102. If the sustain data indicates that the tunnel communication is not sustainable, it is transferred to the sustain data demanding unit 15 as well as the tunnel communication controlling unit 14 before the procedure goes to Step S106. When receiving the sustain data disallowing the tunnel communication, the sustain data demanding unit 15 cancels the counting action and remains not providing the tunnel managing apparatus 4 with any transmission demand.

(Step S106) The tunnel communication controlling unit 14 causes the tunnel communication unit 12 to cancel the tunnel communication. As a result, the tunnel communication between the first data processing apparatus 1 and the second data processing apparatus 2 is terminated. For example, the tunnel communication unit 12 supplies the second data processing apparatus 2 with a notice of terminating the tunnel communication and cancels its transmission of packets to terminate the tunnel communication.

(Step S107) The tunnel communication controlling unit 14 examines whether the tunnel communication is terminated or not. The tunnel communication is terminated when, for example, a command of canceling the tunnel communication (such as an entry data produced by the user) is received from the outside of the first data processing apparatus 1 or the transmission of data from the tunnel communication unit 12 is completed (such as all the data to be transmitted has been dispatched). When the termination of the tunnel communication is desired, the procedure goes to Step S108. If not, the procedure returns back to Step S102.

(Step S108) The tunnel communication controlling unit 14 then transmits a notice of terminating the tunnel communication to the tunnel managing apparatus 4.

The flowchart of Fig. 6 will now be explained.

(Step S201) The communication controlling unit 41 examines whether the demand for starting a tunnel communication is received or not. When so, the procedure goes to Step S202. If not, the procedure moves to Step S205.

(Step S202) The communication controlling unit 41 delivers an address data indicating the IP address of the target data processing apparatus to a data processing apparatus which has transmitted the demand for starting the tunnel communication. Also, a data of identifying the tunnel communication (e.g. , anidentificationof thedataprocessing apparatus for starting the tunnel communication) is transferred from the communication controlling unit 41 to the tunnel communication data managing unit 42. Moreover, a notice of transmitting the sustain data is transmitted to the sustain data transmitting unit 45.

(Step S203) When receiving the data of identifying the tunnel communication, the tunnel communication datamanaging unit 42 saves its tunnel communication data. The saving may involve producing a new record of the tunnel communication data on a given recording medium.

(Step S204) When receiving the notice of transmitting the sustain data from the communication controlling unit 41, the sustain data transmitting unit 45 accesses the tunnel communication data managed by the tunnel communication data managing unit 42 and transmits the sustain data. The procedure then returns back to Step S201.

(Step S205) The demand receiving unit 43 examines whether the demand of transmitting the sustain data is received or not. When the demand of transmitting the sustain data is received, its data of identifying the tunnel communication is transferred to the demand saving unit 44. Also, the data of identifying the tunnel communication together with a command for transmitting the sustain data and an address data indicating the IP address of the data processing apparatus which has provided the transmission demand are transferred to the sustain data transmitting unit 45 before the procedure goes to Step S206. If the demand of transmitting the sustain data is not received, the procedure skips to Step S209.

(Step S206) When receiving the data of identifying the tunnel communication from the demand receiving unit 43, the demand saving unit 44 saves the demand data. The saving may involve producing a new record of the demand data on a given recording medium.

(Step S207) When receiving the data of identifying the tunnel communication, the command for transmitting the sustain data, and the address data indicating the IP address of the data processing apparatus which has provided the transmission demand, the sustain data transmitting unit 45 delivers to the IP address of the address data the sustain data determined from the tunnel communication data managed by the tunnel communication data managing unit 42 through checking the data of identifying the tunnel communication. Simultaneously, the sustain data is transferred from the sustain data transmitting unit 45 to the communication controlling unit 41.

(Step S208) The communication controlling unit 41 judges from the sustain data whether the tunnel communication is terminated or not. When it is judged that the tunnel communication is terminated, the procedure goes to Step S210. If not, the procedure returns back to Step S201.

(Step S209) The communication controlling unit 41 examines whether or not a signal of canceling the tunnel communication is received from the data processing apparatus conducting the tunnel communication. When so, the procedure goes to Step S210. If not, the procedure skips to Step S211.

(Step S210) The communication controlling unit 41 transfers a command for deleting the data of the tunnel communication to be terminated to the tunnel communication data managing unit 42. As a result, the tunnel communication data is deleted. For example, the record of the tunnel communication data is deleted from the storage. The procedure is then returned to Step S201.

(Step S211) The control data receiving unit 46 examines whether the tunnel control data is received or not. When the tunnel control data is received, it is transferred to the data modifying unit 47 before the procedure goes to Step S212. If not, the procedure returns back to Step S201.

(Step S212) In response to the tunnel control data received from the control data receiving unit 46, the data modifying unit 47 modifies the tunnel communication data managed by the tunnel communication data managing unit 42. For example, the tunnel communication data may be modified so that the remaining of the tunnel communication data in the storage is zero. Then, the procedure turns back to Step S201.

The action of the flowchart of Fig. 6 can also be canceled by disconnection of the power supply or entry of an interrupt signal.

The action of the second data processing apparatus 2 will now be explained. The action starts with the tunnel communication controlling unit 23 receiving a notice of starting the tunnel communication and an address data of the IP address of the first data processing apparatus 1 from the communicating unit 21. The address data of the IP address of the first data processing apparatus 1 is then transferred to the tunnel communication unit 22 for directing the tunnel communication unit 22 to transmit the start signal to the IP address. As a result, the tunnel communication between the tunnel communication unit 22 and the tunnel communication unit 21 of the first data processing apparatus 1 can be setup. On the other hand, the tunnel communication controlling unit 23 when receiving a command for terminating the tunnel communication from the first data processing apparatus 1 directs the tunnel communication unit 22 to cancel the tunnel communication. Accordingly, the tunnel communication can be terminated.

The action of the communications system of this embodiment will be described in more detail. It is first assumed that the sustain data demanding unit 15 supplies the tunnel managing apparatus 4 with its transmission demands at intervals of a given time (10 minutes). More specifically, when 10 minutes has elapsed after the reception of the sustain data at the sustain data receiving unit 13, the sustain data demanding unit 15 transmits the transmission demand to the tunnel managing apparatus 4.

The tunnel communication controlling unit 14 in the first data processing apparatus 1 delivers a device identifier "D001" for identifying the first data processing apparatus 1 to the IP address of the tunnel managing apparatus 4. The device identifier "D001" is received by the communication controlling unit 41. The communication controlling unit 41 extracts the IP address "155.32.10.10" of the first data processing apparatus 1 from the header of the device identifier.

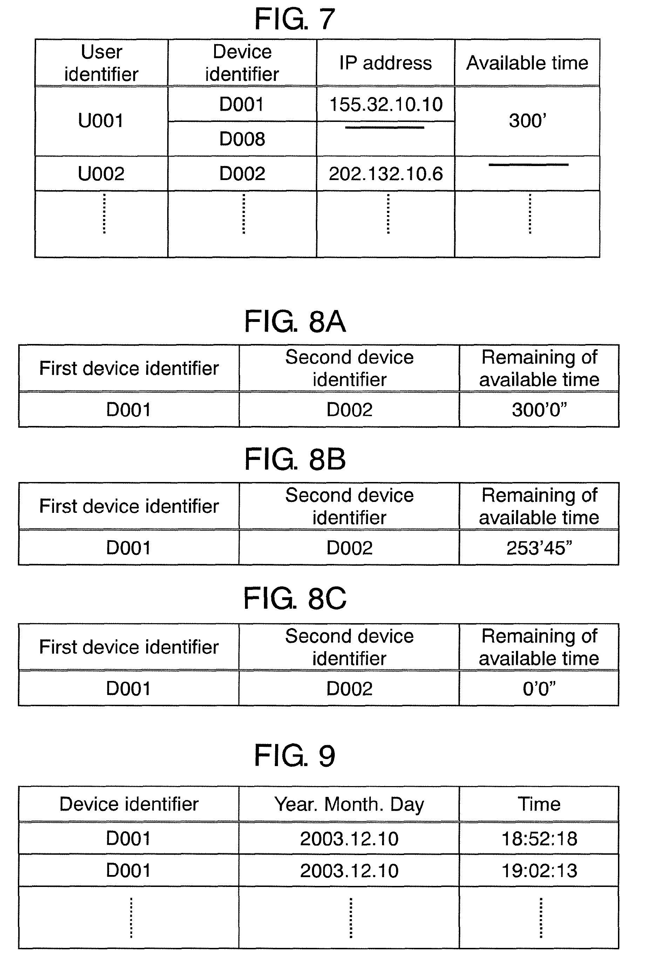

The communication controlling unit 41 holds a user data shown in Fig. 7. The user data consists of a user identifier for identifying the user, a device identifier assigned to the data processing apparatus of the user, an IP address of the user, and a data of time for sustaining the communication. The user may receive the data of time for sustaining the communication when submitting a corresponding payment. The device identifier of the data processing apparatus of the user has been registered by the user to the user data. The communication controlling unit 41 saves the IP address "155.32.10.10" of the first data processing apparatus 1 in combination with the device identifier "D001" received from the first data processing apparatus 1. The IP address is the first record shown in Fig. 7.

Similarly, the tunnel communication controlling unit 23 in the second data processing apparatus 2 delivers its device identifier "D002" to the IP address of the tunnel managing apparatus 4. The device identifier "D002" and the IP address "202.132.10.6" of the second data processing apparatus 2 are saved in a combination as the user data in the third record shown in Fig. 7. A data of time for sustaining the communication assigned with a user identifier "U002" shown in Fig. 7 is expressed by "-" as its payment is not made by the user.

Then, the tunnel communication controlling unit 14 in the first data processing apparatus 1 transmits a demand for setting up the tunnel communication with the second data processing apparatus 2 together with the device identifier "D002" of the second data processing apparatus 2 to the tunnel managing apparatus 4. The demand for setting up the tunnel communication and the device identifier "D002" are received by the communication controlling unit 41 (Step S201). The communication controlling unit 41 constructs the address data of the IP address "202.132.10.6" assignedwith the device identifier "D002" from the user data and transmits it to the IP address of the first data processing apparatus 1 (Step 5202). Simultaneously, the communication controlling unit 41 supplies the tunnel communication data managing unit 42 with the device identifier "D001" of the first data processing apparatus 1 and the device identifier "D002" of the second data processing apparatus 2 for identifying the tunnel communication. Also, the data of time for sustaining the communication (300 minutes) is received by the tunnel communication data managing unit 42. The communication controlling unit 41 transfers the device identifier "D001" and the IP address "155.32.10.10" of the first data processing apparatus 1 together with a command for transmission of the sustain data to the sustain data transmitting unit 45.

In response to the device identifier, the tunnel communication data managing unit 42 adds the tunnel communication data with a record of the tunnel communication between the first data processing apparatus 1 and the second data processing apparatus 2 (Step S203). Fig. 8 illustrates a change in the tunnel communication data managed by the tunnel communication data managing unit 42. As shown in Fig. 8A, the tunnel communication data carries at the beginning the first device identifier "D001", the second device identifier "D002", and the remaining of the connection time "300 minutes". The first device identifier is assigned to the data processing apparatus which conducts the tunnel communication as is expressed by "D001". The remaining of the available time is also assigned with the first device identifier. The remaining of the available time shown in Fig. 8A is a duration through which the tunnel communication between the first data processing apparatus 1 and the second data processing apparatus 2 is sustained. Fig. 8A permits the remaining of the available time to last 300 minutes. The remaining of the available time is monitored and counted down by the tunnel communication data managing unit 42. When a length of time has elapsed after the startup of the tunnel communication, the remaining of the available time will be as expressed in Fig. 8B.

When receiving the device identifier "D001" and the IP address "155.32.10.10" of the first data processing apparatus 1 and the command for transmission of the sustain data from the communication controlling unit 41, the sustain data transmitting unit 45 accesses the tunnel communication data managed by the tunnel communication data managing unit 42 and when the remaining of the available time is not zero, transfers the sustain data to the IP address "155.32.10.10" for sustaining the tunnel communication (Step S204).

Upon receiving the address data from the tunnel managing apparatus 4, the tunnel communication controlling unit 14 in the first data processing apparatus 1 directs the tunnel communication unit 12 to start the tunnel communication with the second data processing apparatus 2. The sustain data transmitted from the tunnel managing apparatus 4 is also received by the sustain data receiving unit 13 and its sustainability is transferred to the sustain data depending unit 15 which in turn starts the counting up of time from zero minute zero second (Step S101).

The sustain data demanding unit 15 judges that the timing for demanding the transmission of the sustain data stands when ten minutes has elapsed after the start of the counting (Step S102) and transmits the demand for transmission of the sustain data to the tunnel managing apparatus 4 (Step S103). The transmission demand includes the command for transmission of the sustain data and the device identifier "D001". In this embodiment, the device identifier "D001" of the first data processing apparatus 1 is utilized for identifying the tunnel communication.

The transmission demand is then received by the demand receiving unit 43 (Step S205). While the device identifier "D001" is received by the demand saving unit 44, it is transferred together with the address data indicative of the IP address of the first data processing apparatus 1 and the demand for transmission of the sustain data to the sustain data transmitting unit 45.

The demand saving unit 44 saves the device identifier with its received date and time data (Step S206). Fig. 9 illustrates an example of the saved data. Saved in the first record shown in Fig. 9 are the date "Dec. 10, 2003" and the time "18 hours, 52 minutes, 18 seconds".

The sustain data transmitting unit 45 accesses the tunnel communication data and when the remaining of the available time is about 290 minutes, delivers the sustain data of sustaining the tunnel communication to the IP address of the address data received from the demand receiving unit 43 (Step S207). The sustain data is also received by the communication controlling unit 41 of the tunnel managing apparatus 4 where it is judged that the tunnel communication is not terminated (Step S208).

The sustain data receiving unit 13 receives the sustain data (Step S104) and judges that the tunnel communication is sustained (Step S105). Then, the counting of the sustain data demanding unit 15 is reset to zero and starts again (Step S102).

By repeating the above steps, the tunnel communication can be continued.

The action of the first data processing apparatus 1 terminating the tunnel communication when a desired amount of data has been transmitted from the first data processing apparatus 1 to the second data processing apparatus 2 will now be explained. As the transmission of the data has been completed, the tunnel communication unit 12 delivers a data of the completion to the tunnel communication controlling unit 14. The tunnel communication controlling unit 14 then judges that the tunnel communication is to be terminated (Step S107) and supplies the tunnel managing apparatus 4 with the signal for terminating the tunnel communication (Step S108). The signal includes a data for terminating the tunnel communication and the device identifier "D001" for identifying the tunnel communication. The tunnel communication controlling unit 14 also delivers the signal for terminating the tunnel communication to the tunnel communication controlling unit 23 in the second data processing apparatus 2. This may be carried out directly or through the tunnel managing apparatus 4. Upon receiving the signal for terminating the tunnel communication, the tunnel communication controlling unit 23 directs the tunnel communication unit 22 to terminate the tunnel communication. In this manner, the tunnel communication between the first data processing apparatus 1 and the second data processing apparatus 2 can be terminated (Step S106).

The communication controlling unit 41 in the tunnel managing apparatus 4 receives the signal for terminating the tunnel communication (Step S209) and examine the remaining of the available time from the tunnel communication data assigned with the device identifier "D001" while transferring the command for deleting the tunnel communication data to the tunnel communication data managing unit 42. In turn, the tunnel communication data managing unit 42 deletes the tunnel communication data assigned with the device identifier "D001" (Step S210). When the tunnel communication data is as shown in Fig. 8B at the reception of the signal of terminating the tunnel communication, the communication controlling unit 41 reads "253 minutes 45 seconds" and updates the user data of the user "U001" shown in Fig. 7 with its remaining time.

The action of terminating the tunnel communication when the remaining of the available time is zero will be described. It is assumed that when the remaining time has been consumed, the tunnel communication data exhibits as shown in Fig. 8C. Then, the sustain data demanding unit 15 supplies the tunnel managing apparatus 4 with the transmission demand (Step S103). The transmission demand is received and saved by the demand receiving unit 43 (Step S206). Simultaneously, the sustain data is produced from the tunnel communication data and transmitted to the tunnel managing apparatus 4 (Step S207). As the remaining of the available time in the tunnel communication data is zero, the sustain data indicates that the tunnel communication is no more sustained. The sustain data is received by the sustain data transmitting unit 45 and transferred to the communication controlling unit 41 which then judges that the tunnel communication is to be terminated (Step S208) and supplies the tunnel communication data managing unit 42 with the command for deleting the tunnel communication data. As a result, the tunnel communication data can be deleted. Also, the time for sustaining the tunnel communication assigned to the user identifier "U001" of the user data is reset to zero.

The sustain data receiving unit 13 in the first data processing apparatus 1 receives the sustain data indicating that the tunnel communication is no more sustained (Steps S104 and S105). The sustain data is then transferred to the tunnel communication controlling unit 14 and the sustain data demanding unit 15. This causes the tunnel communication controlling unit 14 to execute the termination of the tunnel communication and the sustain data demanding unit 15 to cancel its counting action (Step S106).

The action of terminating the tunnel communication from the outside will now be explained, It is assumed that an illegal exercise of the tunnel communication between the first data processing apparatus 1 and the second data processing apparatus 2 is detected by a third party and the device identifier "D001" of the first data processing apparatus is obtained by the third party. The action then starts with the third party operating its data processing apparatus connected to the communications network 3 to dispatch a tunnel control data, which includes the command for terminating the tunnel communication and the device identifier "D001", to the tunnel managing apparatus 4. The tunnel control data is received by the control data receiving unit 46 (Step S211) and transferred to the data modifying unit 47. The data modifying unit 47 then directs the tunnel communication data managing unit 42 to modify the remaining of the available time in the tunnel communication data assigned to the device identifier "D001" to zero. Accordingly, the remaining of the available time in the tunnel communication data assigned to the device identifier "D001" is turned to zero as shown in Fig. 8C (Step S212). This allows the sustain data for disallowing the tunnel communication to be transmitted (Step S207) upon the reception of the transmission demand (Step S205). As a result, the tunnel communication can be terminated (Steps S104 to S106).

Since the tunnel communication data is illustrated for ease of the description, it may be provided in any appropriate form. For example, the tunnel communication data may contain a communication allow/disallow flag in place of the remaining of the available time. The communication allow/disallow flag indicates whether the tunnel communication is allowed or not. More specifically, when the communication allow/disallow flag is "1", the sustain data transmitting unit 45 may judge that the tunnel communication stands and provide the sustain data for allowing the tunnel communication. When the communication allow/disallow flag is "0", the sustain data transmitting unit 45 judge that the tunnel communication is disallowed and provides the sustain data for not sustaining the tunnel communication.

Alternatively, the remaining of the available time in the tunnel communication data shown in Fig. 8 may be replaced by a combination of the elapsed time and the limited length of time for the tunnel communication. In this case, the duration of the tunnel communication is counted up by the tunnel communication data managing unit 42. When the duration exceeds the limited length, the sustain data for not sustaining the tunnel communication is released (Step S207) and the tunnel communication can thus be terminated (Steps S208 and S210).

Although the tunnel communication is prepaid in the embodiment for the length of time through which the tunnel communication is permitted, it may be charged by any other manner. For example, after the tunnel communication is completed, its cost may be charged to the user for the consumption, but not the remaining of the available time which has been recorded. In the latter case, the consumption of time is a data for payment of the tunnel communication. Also, the payment for the tunnel communication may be calculated by, but not limited to, an applicable algorithm.

As described, the communications system of this embodiment allows the sustain data to be transferred from the tunnel managing apparatus 4 to the first data processing apparatus 1 where it is used for controlling the tunnel communication, whereby the tunnel communication can favorably be controlled with no use of known tunnel communication assistant servers. More specifically, when the tunnel communication is desired for immediate disconnection, its data is dispatched to the tunnel managing apparatus 4 which in turn cancels the tunnel communication. Also, since the duration of time for conducting the tunnel communication or the remaining of the available time predetermined for the tunnel communication is monitored with the tunnel communication data, its management such as charging for payment can desirably be controlled.

The communications system of this embodiment has the tunnel managing apparatus 4 assigned for managing the tunnel communication between desired data processing apparatuses, whereby the traffic of data (over the communications network 3) can accurately be controlled.

While the demand saving unit 44 is arranged in this embodiment to save the time data about reception of the transmission demand in relation to the device identifier, it may save any other data. For example, the data for identifying the tunnel communication may be a combination of a tunnel identifier or a pair of device identifiers for identifying the two data processing apparatus which conduct the tunnel communication therebetween and the time data.

Although the demand saving unit 44 is arranged in this embodiment to sage the data for identifying the tunnel communication, it may save in a combination with the time data any other data such as a data for identifying the data processing apparatus which has simply transmitted a transmission demand (while not necessarily identifying the tunnel communication).

Moreover, the action (Step S204) of transmitting the sustain data from the tunnel managing apparatus 4 is conducted, but not limited to, at the beginning of the tunnel communication in this embodiment. When the sustain data is not released at the beginning of the tunnel communication, the sustain data demanding unit 15 may start its counting action in synchronization with the beginning of the tunnel communication.

### (Embodiment 2)

A communications system according to Embodiment 2 of the present invention will be described referring to the relevant drawings. The communications system of this embodiment is substantially identical in the arrangement to that of Embodiment 1 shown in Figs. 1 to 4, except that the actions are carried out in a different sequence, and will be described in more detail.

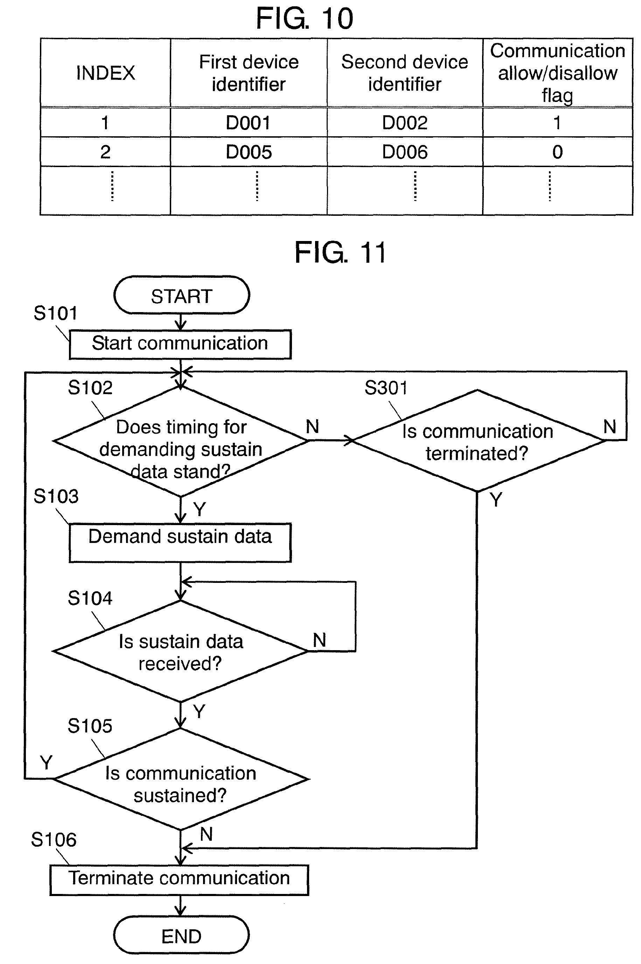

Fig. 11 is a flowchart showing the action of a first data processing apparatus 1 in this embodiment. As shown in Fig. 11, the actions are identical to those of Embodiment 1 shown in the flowchart of Fig. 5. The action at Step S301 only is different and will thus be described in more detail.

(Step S301) The tunnel communication controlling unit 14 examines whether the tunnel communication is to be terminated or not. When the tunnel communication is terminated, the procedure goes to Step S106. If not, the procedure returns back to Step S102.

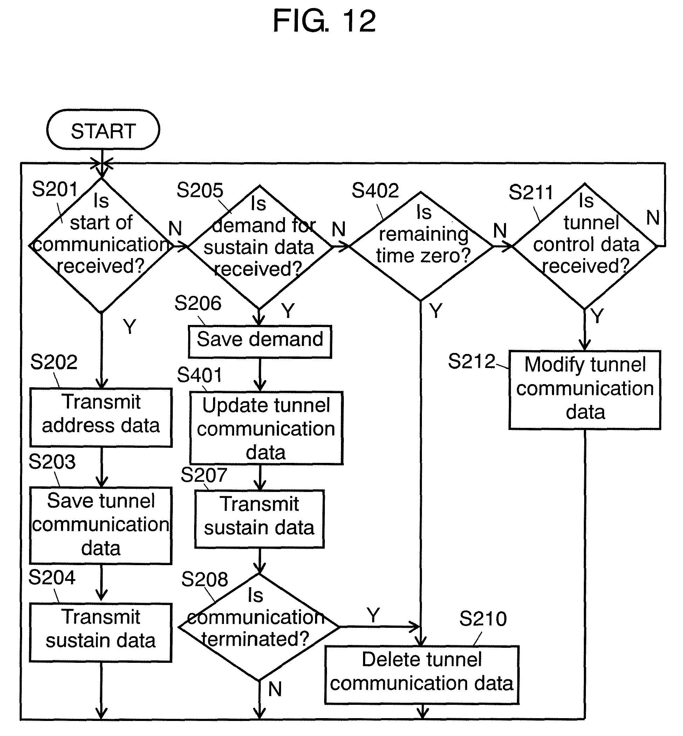

Fig. 12 is a flowchart showing the action of a tunnel managing apparatus 4 in the embodiment. As shown in Fig. 12, the actions are substantially identical to those of the flowchart of Embodiment 1 shown in Fig. 7, except Steps S401 and S402, and will be described in no more detail.

(Step S401) The tunnel communication data managing unit 42 in the tunnel managing apparatus 4 updates the data of records for producing and transmitting the sustain data. For example, the remaining of the available time for permitting the tunnel communication is added with an extra length. Also, a sum of times through which the tunnel communication has been conducted is added with the extra length.

(Step S402) It is examined by the communication controlling unit 41 whether or not the record in which the remaining of the available time is zero is contained in the tunnel communication data. When so, the procedure goes to Step S210 for terminating the tunnel communication of the record. If not, the procedure moves to Step S211.

The action of a second data processing apparatus 2 of this embodiment is substantially identical to that of Embodiment 1 and will be explained in no more detail.

The action of the communications system of this embodiment will be described in more detail. Thesteps(Steps S201 and S202) of the demand for starting the tunnel communication transmitted from the first data processing apparatus 1 to the tunnel managing apparatus 4 and the address data transmitting from the tunnel managing apparatus 4 to the first data processing apparatus 1 are identical to those of Embodiment 1 and will be explained in no more detail.

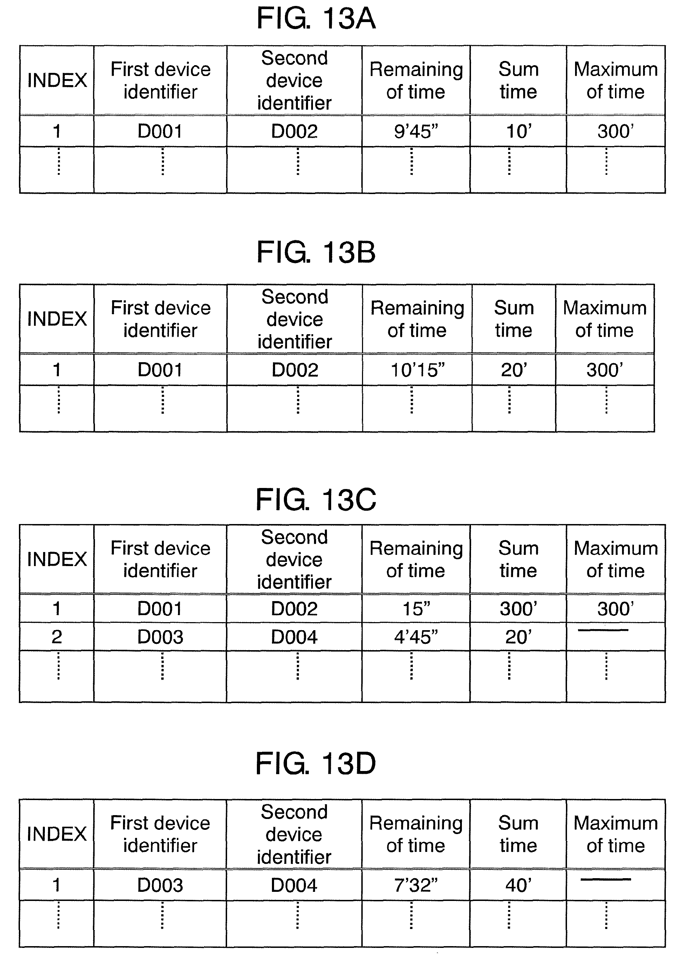

The tunnel communication data managing unit 42 receives the device identifier "D001", the other device identifier "D002", and the duration of time "300 minutes" for the tunnel communication from the communication controlling unit 41 and generates a new record in the tunnel communication data from those received information (Step S203). The new record in the tunnel communication data is shown in Fig. 13A as expressed by INDEX=1. The duration of time "300 minutes" is recorded as the maximum length of time for sustaining the tunnel communication. The maximum length is an upper limit of the duration. Both the sum of time and the remaining of the available time in the tunnel communication data are set as defaults to ten minutes. The remaining of the available time is counted down as the time goes. Shown in Fig. 13A is the tunnel communication data where 15 seconds has elapsed after the setup of the record. It is assumed in this embodiment that the sum of time and the remaining of the available time in the tunnel communication data are increased by ten minutes upon the updating of the transmission demand for the sustain data.

In response to the device identifier "D001", the IP address of the first data processing apparatus 1, and the demand for transmission of the sustain data from the communication controlling unit 41, the sustain data transmitting unit 45 examines the record (INDEX=1) in the tunnel communication data assigned with the device identifier "D001" shown in Fig. 13A. When the sum of time remains not exceeding the maximum, the sustain data transmitting unit 45 judges that the tunnel communication is sustained and transmits the sustain data for permitting the tunnel communication to the IP address of the first data processing apparatus 1 (Step S204). The sustain data also includes the tunnel sustaining time data which indicates the remaining of the available time "9 minutes 45 seconds" for sustaining the tunnel communication.

When receiving the address data from the tunnel managing apparatus 4, the tunnel communication controlling unit 14 in the first data processing apparatus 1 directs the tunnel communication unit 12 to start the tunnel communication. Simultaneously, the sustain data is received by the sustain data receiving unit 13 and its tunnel sustaining time data which reads "9 minutes 45 seconds" is transferred to the sustain data demanding unit 15 which then starts its counting action (Step S101).

When its counting is turned from "9 minutes 45 seconds" to "9 minutes 30 seconds" by reducing 15 seconds, the sustain data demanding unit 15 judges that the timing of demanding the sustain data stands (Step S102) and transmits the transmission demand for demanding the transmission of the sustain data to the tunnel managing apparatus 4 (Step S103). The transmission demand includes the device identifier "D001". The judgment of the timing for demanding the sustain data is based on the reduction by 15 seconds but not the tunnel sustaining time because the tunnel communication may unintentionally be canceled (Steps S402 and S210) by the transmission of the demand extending 5 seconds or more. It is a good idea for avoiding such unintentional cancellation that the sustain data transmitting unit 45 reduces in advance a given length (5 seconds) from the tunnel sustaining time and allows the sustain data demanding unit 15 to release the transmission demand when the counting is equal to the tunnel sustaining time.

As the transmission demand is received by the demand receiving unit 43 (Step S205), its device identifier "D001" is transferred to the demand saving unit 44 and its demand and the IP address of the first data processing apparatus 1 carried in its header are transferred to the sustain data transmitting unit 45. The saving of the demand data is identical to that of Embodiment 1 and will be explained in no more detail.

The sustain data transmitting unit 45 then provides the tunnel communication data managing unit 42 with the command for transmission of the sustain data containing the record of the tunnel communication data assigned with the device identifier "D001". In response, the tunnel communication data managing unit 42 adds the remaining time and the sum time with ten minutes at the record of INDEX=1 in the tunnel communication data (Step S401). As a result, the tunnel communication data is turned to a form shown in Fig. 13B.

The sustain data transmitting unit 45 examines the record in the tunnel communication data assigned with the device identifier "D001" and when the sum time of "20 minutes" remains not exceeding the maximum of "300 minutes", transmits to the first data processing apparatus 1 the sustain data which permits the tunnel communication as including the tunnel sustaining time data of "10 minutes 15 seconds" (Step S207). The sustain data is also transferred to the communication controlling unit 41 which then judges that the tunnel communication is not to be terminated (Step S208).

The sustain data receiving unit 13 receives the sustain data (Step S104), judges that the tunnel communication remains sustained (Step S105), and provides the sustain data demanding unit 15 with the tunnel sustaining time data of "10 minutes 15 seconds". In response, the sustain data demanding unit 15 starts the counting action. By repeating the steps, the tunnel communication can be sustained.

The action of the first data processing apparatus 1 terminating the tunnel communication will now be described. For terminating the tunnel communication, the tunnel communication controlling unit 14 first judges that the tunnel communication is to be terminated (Step S301) and directs the tunnel communication unit 12 to terminate the tunnel communication (Step S106). Simultaneously, the tunnel communication controlling unit 14 cancels the counting action and delivers the command for terminating the transmission of the transmission demand to the sustain data demanding unit 15 via the sustain data receiving unit 13. As a result, the transmission of the transmission demand is canceled.

As the transmission demand for demanding the transmission of the sustain data for sustaining the tunnel communication between the first data processing apparatus 1 and the second data processing apparatus 2 is not received by the tunnel managing apparatus 4, the remaining of the record "INDEX=1" in the tunnel communication data finally becomes zero. The communication controlling unit 41 detects zero of the remaining time (Step S402), overwrites the user data assigned with the user identifier "U001" shown in Fig. 7 with a difference given by subtracting the sum from the maximum of the available time, and directs the tunnel communication data managing unit 42 to delete the record of "INDEX=1". As a result, the record of "INDEX=1" is deleted from the tunnel communication data (Step S210).

The action of terminating the tunnel communication when the available time reaches at its maximum will be explained. It is assumed that the action starts with the tunnel communication data shown in Fig. 13C, As the transmission demand for demanding the sustain data is received by the demand receiving unit 43 (Step S205), the tunnel communication data is updated (Step S401) and the sum of the communicated time is 310 minutes. As the sum exceeds the maximum of the available time, the sustain data transmitting unit 45 judges that the tunnel communication is no more sustained and releases the sustain data of not sustaining the tunnel communication (Step S207). When receiving the sustain data of not sustaining the tunnel communication (StepS208), the communication controlling unit 41 deletes the record of "INDEX=1" from the tunnel communication data. Simultaneously, the available time assigned with the user identifier "U001" in the user data is overwritten with "0".

The action of the first data processing apparatus 1 upon receiving the sustain data of not sustaining the tunnel communication is equal to that of Embodiment 1 and its description will be omitted.

The action of terminating the tunnel communication from the outside will now be explained. As the device identifier "D001" and the tunnel communication control data including the command for terminating the tunnel communication are received by the control data receiving unit 46 (Step S211), the data modifying unit 47 shifts the remaining of the available time in the record of the tunnel communication data assigned with the device identifier "D001" to zero. It is then judged that the remaining of the available time is zero (Step S402) and the record is deleted (Step S210). Accordingly, even when the transmission demand for demanding the sustain data assigned with the device identifier "D001" is received (Step S205), its demanded record is not present in the tunnel communication data as shown in Fig. 13D thus causing the sustain data of not sustaining the tunnel communication to be released (Step S207). Consequently, the tunnel communication can be terminated (Steps S105 and S106). Meanwhile, as the record has been deleted from the tunnel communication data, its deleting action at Step S210 is not executed.

In this embodiment like Embodiment 1, the transmission demand may be transferred at equal intervals of time from the sustain data demanding unit 15 to the tunnel managing apparatus 4. It is however mandatory that the duration of time for transmitting the transmission demand is equal to the duration of time for adding the remaining time and the sum time with a given length of time in the tunnel communication data.

While the available time in the tunnel communication data is set with the maximum in this embodiment, it may be determined without the maximum. Alternatively, when the demand for transmission of the sustain data is received, the sum time and the remaining time are added with a given length of time (See "INDEX=2" in the tunnel communication data shown in Fig. 13C). The user may be charged for the sum time of the tunnel communication after the communication is terminated.

As described, the communication system of this embodiment like Embodiment 1 can permit the tunnel communication with no use of tunnel communication controllable servers.

Although the data modifying unit 47 in the embodiment is arranged to modify the tunnel communication data for terminating the tunnel communication, its modifying action may be conducted for any other purpose than the termination of the tunnel communication. For example, as the user has paid for carrying out a desired duration of the tunnel communication, the data modifying unit 47 can modify the tunnel communication data in order to increase the remaining time or the maximum of the available time by the desired duration.

### (Embodiment 3)

A communications system according to Embodiment 3 of the present invention will be described referring to the relevant drawings. The communications system of this embodiment is featured in which the first data processing apparatus provides the tunnel managing apparatus with the tunnel communication data including an extension of the tunnel communication. The communications system of this embodiment is substantially identical in the arrangement to that of Embodiment shown in Fig. 1, except that the first data processing apparatus 1 is replaced by a first data processing apparatus 5 and the tunnel managing apparatus 4 is replaced by a tunnel managing apparatus 6, and will be described in no more detail.

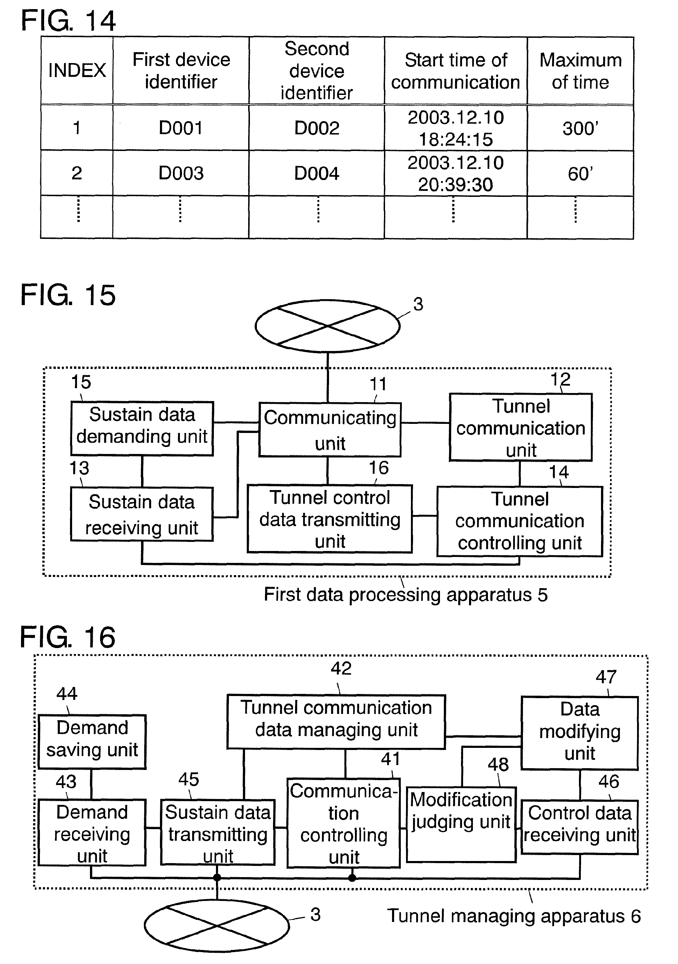

Fig. 15 is a block diagram showing an arrangement of the first data processing apparatus 5. As shown in Fig. 15, the first data processing apparatus 5 comprises a communicating unit 11, a tunnel communication unit 12, a sustain data receiving unit 13, a tunnel communication controlling unit 14, a sustain data demanding unit 15, and a tunnel control data transmitting unit 16. The arrangement and its action are identical to those of Embodiment 1 and their description will be omitted, excluding the tunnel control data transmitting unit 16.

The tunnel control data transmitting unit 16 is provided for transmitting a tunnel control data. The tunnel control data is a data for controlling the tunnel communication. The tunnel control data provided by the tunnel control data transmitting unit 16 is to demand an extension of the available time for the tunnel communication. Alternatively, the tunnel control data may be a data for demanding an extension of the tunnel sustaining time. The tunnel control data transmitting unit 16 may include a transmitter device (e. g. , a modem or a network card) or not. The tunnel communication data transmitting unit 16 may be implemented by either a hardware or a software such as a driver for driving the transmitter device.

Fig. 16 is a block diagram showing an arrangement of the tunnel managing apparatus 6 in this embodiment. As shown in Fig. 16, the tunnel managing apparatus 6 comprises a communication controlling unit 41, a tunnel communication data managing unit 42, a demand receiving unit 43, a demand saving unit 44, a sustain data transmitting unit 45, a control data receiving unit 46, a data modifying unit 47, and a modification judging unit 48. The arrangement and its action are identical to those of Embodiment 1 and their description will be omitted, excluding the modification judging unit 48.

The modification judging unit 48 is provided for, when receiving a tunnel control data, judging from the tunnel control data whether the tunnel communication data is modified or not. The judgment is made from the tunnel control data received by the control data receiving unit 46 to determine whether the tunnel communication data is modified or not. The modification judging unit 48 in this embodiment is responsive to the tunnel control data supplied from the first data processing apparatus 5 for demanding an extension of the time for sustaining the tunnel communication. The criteria for the judgment will be explained later in more detail. When the modifying unit 48 judges that the tunnel communication data is to be modified, the data modifying unit 47 modifies the tunnel communication data according to the tunnel control data received by the control data receiving unit 46.

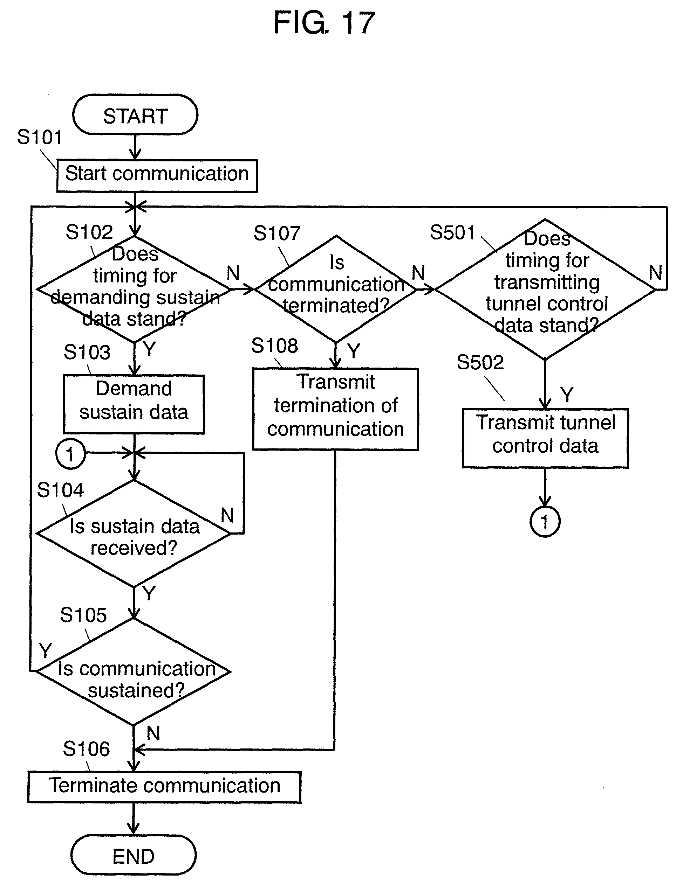

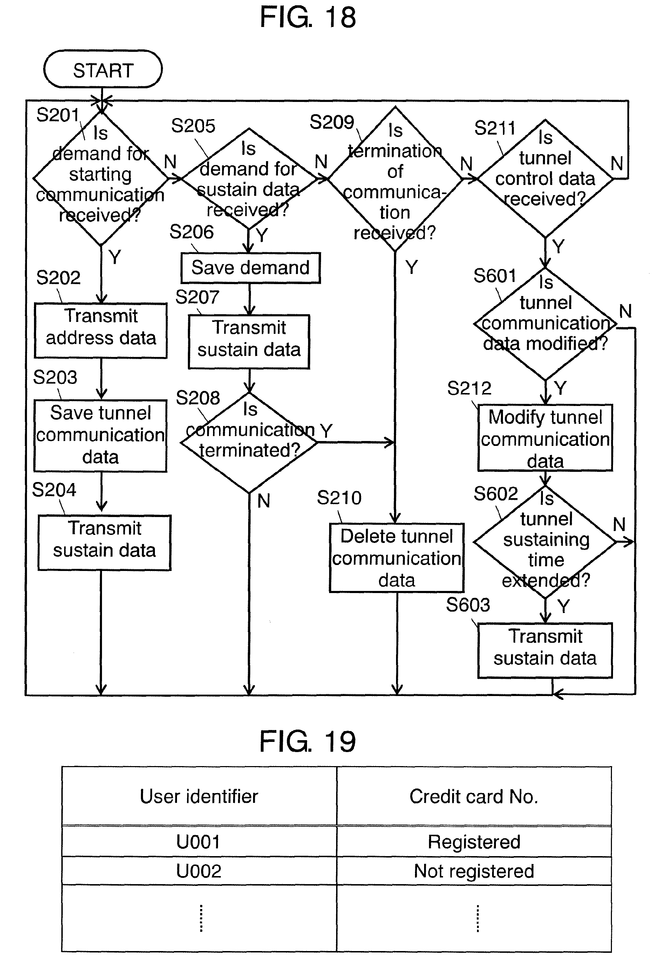

The action of the communications system of this embodiment will now be described referring to the flowcharts shown in Figs. 17 and 18. The flowchart of Fig. 17 illustrates the action of the first data processing apparatus 5. The flowchart of Fig. 18 illustrates the action of the tunnel managing apparatus 6.

The flowchart of Fig. 17 will now be explained. The steps in Fig. 17 are identical to those of the flowchart of Embodiment 1 shown in Fig. 5, except S501 and S502, and will be explained in no more detail.

(Step S501) The tunnel control data transmitting unit 16 examines whether or not the timing for transmitting the tunnel control data stands. When the timing for transmitting the tunnel control data stands, the procedure goes to Step S502. If not, the procedure returns back to Step S102.

(Step S502) The tunnel control data transmitting unit 16 releases the tunnel control data. The procedure is then moved to Step S104. The tunnel control data may be received from any other component or generated in the tunnel control data transmitting unit 16. Alternatively, the tunnel control data may be saved in a known recording medium which can easily be accessed.

Although the transmission of the tunnel control data is followed by the reception of the sustain data in the flowchart of Fig. 17, it may not precede the reception of the sustain data.

The flowchart of Fig. 18 will be explained. The steps in Fig. 18 are identical to those of the flowchart of Embodiment 1 shown in Fig. 6, except S601 to S603, and will be explained in no more detail.

(Step S601) The modification judging unit 48 judges from the tunnel control data received by the control data receiving unit 46 whether or not the tunnel communication data is to be modified. When it is judged that the tunnel communication data is to be modified, the procedure goes to Step S212. If not, the procedure returns back to Step S201.

(Step S602) The data modifying unit 47 examines whether the modification of the tunnel communication data conducted at Step S212 is intended to extend the available time for the tunnel communication. When it is judged that the modification is to extend the available time, the procedure goes to Step S603. If not, the procedure returns back to Step S201.

(Step S603) The sustain data transmitting unit 45 delivers the sustain data for the tunnel communication of which the available time is extended at Step S212. Then, the procedure returns back to Step S201.

Although the reception of the tunnel control data for extending the available time for the tunnel communication is followed by the transmission of the sustain data in the flowchart of Fig. 18, it may not precede the transmission of the sustain data.

The action of the communications system of this embodiment will further be explained. The transmission of the transmission demand from the sustain data demanding unit 15 and the transmission of the sustain data in response to the transmission demand are identical to those of Embodiment 1 and will be explained in no more detail. According to this embodiment, the sustain data includes the remaining of the available time for the tunnel communication. This allows the user of the first data processing apparatus 5 to check the remaining time contained in the sustain data and find how long the tunnel communication is sustained. The actions of transmitting the tunnel control data for extending the available time for sustaining the tunnel communication and of modifying the tunnel communication data in response to the tunnel control data will now be explained.

It is assumed like Embodiment 1 that the tunnel communication is carried out between the first data processing apparatus 5 assigned with the device identifier "D001" and the second data processing apparatus 6 assigned with the device identifier "D002". When the remaining of the available time is 23 minutes 15 seconds, the user of the first data processing apparatus 5 operates its entry device (not shown) to enter a command for extending the available time. The command is received by an entry data receiver (not shown) and the tunnel control data transmitting unit 16 judges that the timing of transmitting the tunnel control data stands (Step S501). The tunnel control data transmitting unit 16 retrieves the tunnel control data from an unshown recording medium and transmits it to the tunnel managing apparatus 6 (Step S502). The tunnel control data includes the command for increasing the tunnel sustaining time (the remaining of the available time) by 300 minutes and the device identifier "D001" of the first data processing apparatus 5.

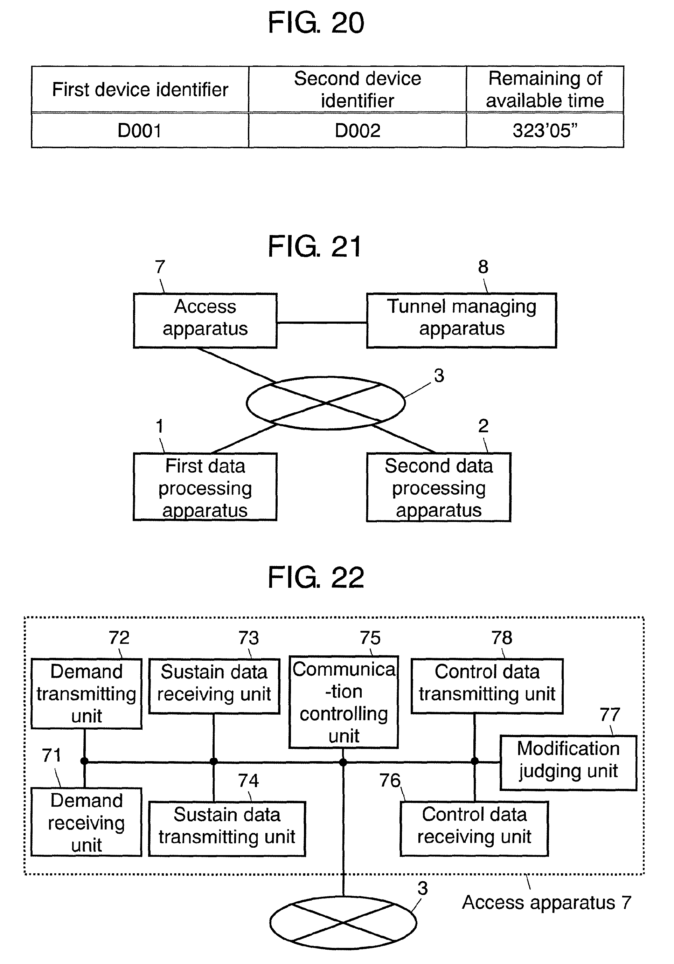

The tunnel control data is then received by the control data receiving unit 46 of the tunnel managing apparatus 6 (Step S211). The modification judging unit 48 judges from the tunnel control data indicating the extension of 300 minutes and received at the control data receiving unit 46 whether or not the tunnel communication data is to be modified (Step S601). More specifically, the modification judging unit 48 holds a table for representing the relationship between the user identifier and its credit card No. as shown in Fig. 19. Using the device identifier "D001" in the tunnel control data received at the control data receiving unit 46, the modification judging unit 48 accesses the user data shown in Fig. 7 and determines that the tunnel control data is assigned to the user of the user identifier "U001". Also referring to the table where the user's credit card No. is registered, the modification judging unit 48 determines that the user is payable through its credit card and judges that the tunnel communication data is to be modified. This allows the data modifying unit 47 to add the remaining of the available time with an extension of 300 minutes at the record assigned with the device identifier "D001" in the tunnel communication data (Step S212). Then, the tunnel communication data is turned as shown in Fig. 20.

The data modifying unit 47 then judges that the tunnel communication data is modified for extending the available time for sustaining the tunnel communication (Step S602) and provides, through an unshown route, the sustain data transmitting unit 45 with the command for transmitting the sustain data. In turn, the sustain data transmitting unit 45 accesses the tunnel communication data shown in Fig. 20 and transmits to the first data processing apparatus 5 the sustain data carrying the remaining of "323 minutes 5 second " (Step S603).

The sustain data is then received by the sustain data receiving unit 13 of the first data processing apparatus 5 (Step S104) and judged that the tunnel communication is sustainable (Step S105). Accordingly, the tunnel communication remains sustained. Since the remaining of the available time is extended in the tunnel communication data saved in the tunnel managing apparatus 6, it allows the tunnel communication between the first data processing apparatus 5 and the second data processing apparatus 6 to proceed for a longer period of time.

The tunnel communication data is modified according to the tunnel control data carrying an extension data for the tunnel communication in this embodiment. In case that the tunnel control data is provided from the data processing apparatus of the other user assigned with the user identifier "U002", it is then judged that its credit card No. is not registered and the modification of the tunnel communication data is inhibited, thus permitting no extension of the available time for sustaining the tunnel communication.

As described, the communications system of this embodiment allows the remaining of the available time in the tunnel communication data to be extended by a desired length in response to the tunnel control data which permits the extension of the available time as is received from the first data processing apparatus 1. Accordingly, when the user wants to extend its available time for sustaining the tunnel communication, it can favorably demand the extension.

Also, the modification judging unit 48 judges from the tunnel control data whether or not the tunnel communication data is to be modified. Only when it is judged that the tunnel communication data is to be modified, the modification of the tunnel communication data can be permitted. For example, as described previously, the extension of the tunnel communication desired by one user can be permitted when it is acknowledged that the user's credit card No. has been registered.

In this embodiment, the modification judging unit 48 is used for judging from the registration of credit card numbers whether or not the tunnel communication data is to be modified. The modification judging unit 48 may judge from any other factor, for example, the degree of creditability accompanied with the user identifier or the device identifier. In that case, when the tunnel control data is received from the user or device at a higher degree of the creditability, the modification of the tunnel communication data can be permitted. If the creditability is low at the user or device, the tunnel communication data will not be modified. Also, the modification judging unit 48 may judge from the tunnel control data whether the tunnel communication data is saved or not in the tunnel communication data managing unit 42. When not, the modification will be inhibited. (For example, even when the tunnel control data is received for permitting the extension of the tunnel communication, the modification can be canceled with the tunnel communication data having been deleted.)

In this embodiment, the tunnel control data to be used for judgment of the modification judging unit 48 whether or not the tunnel communication data is to be modified carries the data for extending the available time for sustaining the tunnel communication. However, the modification judging unit 48 may judge from any other type of the tunnel control data whether or not the tunnel communication data is to be modified. For example, the tunnel control data may include a command for shifting the tunnel sustaining time to zero in the tunnel communication data as is used for judgment whether the tunnel control data is authentic or not. More specifically, the tunnel control data received from a user over the network may be judged that it is authentic when the address of the user is a registered address. If the address is not registered, the tunnel control data is judged as not authentic. When The tunnel control data is received from the entry device, it may be judged from its accompanied password or any other identification tag. When its password is good, the tunnel control data is authentic. If not, the tunnel control data is not authentic.

This embodiment allows the communications system of Embodiment 1 to operate in which the tunnel control data delivered from the first data processing apparatus carries a demand for extending the available time for sustaining the tunnel communication and allows the tunnel communication to be carried out throughout the extended period of the available time. Also, the communications system of Embodiment 2 may equally be operated in the same manner for extending the available time for sustaining the tunnel communication. For example, when the tunnel control data carrying a demand for extending the available time for sustaining the tunnel communication is received by the tunnel managing apparatus, it is used for extending the maximum of the available time or the remaining of the available time in the tunnel communication data.

Although the demand saving unit 44 is provided in the tunnel managing apparatus, it may be eliminated when no log for demanding the transmission of the sustain data is needed to be recorded.

### (Embodiment 4)

A communications system according to Embodiment 4 of the present invention will be described referring to the relevant drawings. The communications system of this embodiment is featured in that a tunnel communication apparatus can be accessed via an access apparatus by each data processing apparatus.

Fig. 21 illustrates an arrangement of the communications system of Embodiment 4. As shown in Fig. 21, the communications system comprises a first data processing apparatus 1, a second data processing apparatus 2, an access apparatus 7, and a tunnel communication apparatus 8. The first data processing apparatus 1 and the second data processing apparatus 2 are equal in the arrangement to those of Embodiment 1 and will be explained in no more detail, excluding the facts that the demand for transmission of the sustain data is received by the access apparatus 7 but not the tunnel managing apparatus 8 and that the setup for the tunnel communication between the first data processing apparatus 1 and the second data processing apparatus 2 is carried out by the access apparatus 7.

Fig. 22 is a block diagram showing an arrangement of the access apparatus 7 in this embodiment. As shown in Fig. 22, the access apparatus 7 comprises a demand receiving unit 71, a demand transmitting unit 72, a sustain data receiving unit 73, a sustain data transmitting unit 74, a communication controlling unit 75, a control data receiving unit 76, a modification judging unit 77, and a control data transmitting unit 78.

The demand receiving unit 71 is provided for receiving a transmission demand of demanding the transmission of the sustain data which is a data for sustaining the tunnel communication between two or more data processing apparatuses. The transmission demand may be received from the first data processing apparatus 1. The demand receiving unit 71 may include a receiver device (e.g., a modem or a network card) or not. (In the former case, the receiver device is connected between the demand receiving unit 71 and the communications network 3.) The demand receiving unit 71 may be implemented by either a hardware or a software such as a driver for driving the receiver device.

The demand transmitting unit 72 is provided for, when the transmission demand is received at the demand receiving unit 71, transferring the transmission demand to the tunnel managing apparatus 8. The demand transmitting unit 72 may include a transmitter device (e.g., a modem or a network card). (In that case, the transmitter device is connected between the demand transmitting unit 72 and the communications network 3.) The demand transmitting unit 72 may be implemented by either a hardware or a software such as a driver for driving the transmitter device.

The sustain data receiving unit 73 is provided for receiving a sustain data from the tunnel managing apparatus 8. The sustain data receiving unit 73 may include a receiver device (e.g., a modem or a network card). (In that case, the receiver device is connected between the sustain data receiving unit 73 and the communications network 3.) The sustain data receiving unit 73 may be implemented by either a hardware or a software such as a driver for driving the receiver device.

The sustain data transmitting unit 74 is provided for, when the sustain data is received at the sustain data receiving unit 73, transferring the sustain data. For example, the sustain data is transferred from the sustain data transmitting unit 74 to the first data processing apparatus 1. The sustain data transmitting unit 74 may include a transmitter device (e.g., a modem or a network card). (In that case, the transmitter device is connected between the sustain data transmitting unit 74 and the communications network 3.) The sustain data transmitting unit 74 may be implemented by either a hardware or a software such as a driver for driving the transmitter device.

The communication controlling unit 75 is provided for setting up the tunnel communication between the first data processing apparatus 1 and the second data processing apparatus 2. For example, the communication controlling unit 74 supplies the first data processing apparatus 1 with an address data indicative of the IP address for communicating with the second data processing apparatus 2.

The control data receiving unit 76 is provided for receiving a tunnel control data. The tunnel control data is a data for controlling the tunnel communication, as described in Embodiment 1. The control data receiving unit 76 may be arranged to receive the tunnel control data from an entry device (e.g. , a keyboard, a mouse, or a touch panel) or over the communications network 3. It is assumed in this embodiment that the tunnel control data is received over the communications network 3.

The modification judging unit 77 is provided for receiving the tunnel control data and judging from the tunnel control data whether or not the tunnel communication data managed by the tunnel managing apparatus 8 is to be modified. The judgment, like in the modification judging unit 48, is made from the tunnel control data to determine whether the modification of the tunnel communication data is accepted or not. The judgment of the modification judging unit 77 for examining from the tunnel control data whether the tunnel communication data is modified or not includes examining whether or not the tunnel control data is transferred to the tunnel managing apparatus 8. When the modification judging unit 77 has judged from the tunnel control data that the tunnel communication data is modified, the judgment may be repeated again by the tunnel managing apparatus 8. (It is possible that the modification of the tunnel communication data is rejected even when the modification judging unit 77 has judged from the tunnel control data that the tunnel communication data is modified.) Alternatively, the tunnel managing apparatus 8 may not repeat the action of judgment. The following description is based on the latter case.

The control data transmitting unit 78 is provided for, when the tunnel control data is received by the control data receiving unit 76 and used by the modification judging unit 77 judging that the tunnel communication data is to be modified, transferring the tunnel control data to the tunnel managing apparatus 8. The control data transmitting unit 78 may include a transmitter device (e.g., a modem or a network card). (In that case, the transmitter device is connected between the control data transmitting unit 78 and the communication network 3.) The control data transmitting unit 78 may be implemented by either a hardware or a software such as a driver for driving the transmitter device.

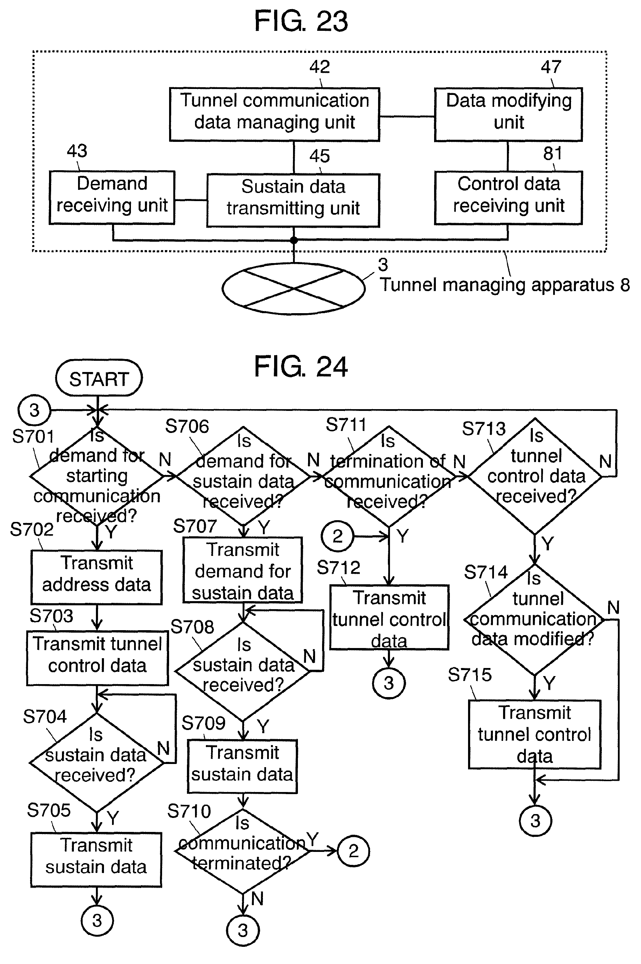

Fig. 23 is a block diagram showing an arrangement of the tunnel managing apparatus 8 in this embodiment. As shown in Fig. 23, the tunnel managing apparatus 8 comprises a tunnel communication data managing unit 42, a demand receiving unit 43, a sustain data transmitting unit 45, a data modifying unit 47, and a control data receiving unit 81. The arrangement of the tunnel managing apparatus 8 is equal to that of Embodiment 1, excluding the control data receiving unit 81, and will be described in no more detail. The control data receiving unit 81 is also equal in the action to the control data receiving unit 46 of Embodiment 1, except that the tunnel control data is received but not accepted, and will be explained in no more detail. While the demand receiving unit 43 is arranged to receive the transmission demand from the access apparatus 7 and the sustain data transmitting unit 45 is arranged to transmit the sustain data to the access apparatus 7, the control data receiving unit 81 can receive the control data from the access apparatus 7.

The exchange of data between the access apparatus 7 and the tunnel managing apparatus 8 may be conducted over the communications network 3 or a dedicated line.

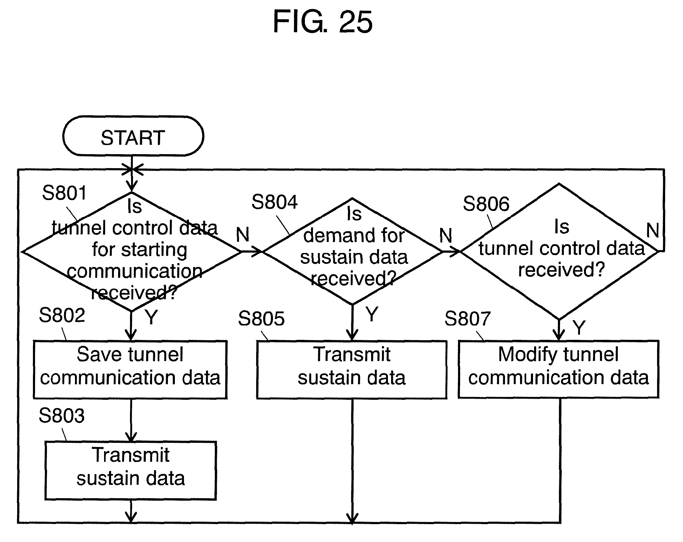

The action of the communications system of this embodiment will now be described referring to the flowcharts of Figs. 24 and 25. The flowchart of Fig. 24 illustrates the action of the access apparatus 7 while the flowchart of Fig. 25 illustrates the action of the tunnel managing apparatus 8.

The flowchart of Fig. 24 is explained.

(Step S701) The communication controlling unit 75 examines whether the demand for starting a tunnel communication is received or not. When so, the procedure goes to Step S702. If not, the procedure moves to Step S706.

(Step S702) The communication controlling unit 75 delivers an address data indicating the address of the target data processing apparatus to the data processing apparatus which has transmitted the demand for starting the tunnel communication. The address data may include another data, such as a port number, in addition to the address. Also, a data of identifying the tunnel communication (e.g., an identification of the data processing apparatus for starting the tunnel communication) is transferred from the communication controlling unit 75 to the control data transmitting unit 78.

(Step S703) The control data transmitting unit 78 supplies the tunnel managing apparatus 8 with the tunnel control data including the demand for starting the tunnel communication and the tunnel communication identifying data received from the communication controlling unit 75.

(Step S704) The sustain data receiving unit 73 examines whether or not the sustain data is received from the tunnel managing apparatus 8. When the sustain data is received, the procedure goes to Step S705. If not, the action of Step S704 is repeated until the sustain data is received.

(Step S705) The sustain data transmitting unit 74 transfers the sustain data received at the sustain data receiving unit 73 to the data processing apparatus which conducts the tunnel communication. The procedure then returns back to Step S701.

(Step S706) The demand receiving unit 71 examines whether the demand of transmitting the sustain data is received or not. When the demand of transmitting the sustain data is received, the procedure goes to Step S707. If not, the procedure skips to Step S711.

(Step S707) The demand transmitting unit 72 transfers the demand of transmission of the sustain data received at the demand receiving unit 71 to the tunnel managing apparatus 8.

(Step S708) The sustain data receiving unit 73 examines whether or not the sustain data is received from the tunnel managing apparatus 8. When the sustain data is received, the procedure goes to Step S709. If not, the steps up to S708 are repeated until the sustain data is received.

(Step S709) The sustain data transmitting unit 74 transfers the sustain data received at the sustain data receiving unit 73 to the data processing apparatus which conducts the tunnel communication.

(Step S710) The communication controlling unit 75 examines whether the sustain data indicating the termination of the tunnel communication is received or not. When the termination of the tunnel communication is desired, the procedure goes to Step S712. If not, the procedure returns back to Step S701.

(Step S711) The communication controlling unit 75 examines whether or not the demand for terminating the tunnel communication is received from the data processing apparatus which conducts the tunnel communication. When the demand is received, the procedure goes to Step S712. If not, the procedure moves to Step S713.

(Step S712) The control data transmitting unit 78 transfers the tunnel control data indicating the termination of the tunnel communication to the tunnel managing apparatus 8. The procedure is then returned to Step S701.

(Step S713) The control data receiving unit 77 examines whether the tunnel control data is accepted or not. When the tunnel control data is accepted, the procedure goes to Step S714. If not, the procedure returns back to Step S701.

(Step S714) The modification judging unit 77 judged from the tunnel control data received by the control data receiving unit 76 whether or not the tunnel communication data is to be modified. When the tunnel communication data is to be modified, the procedure goes to Step S715. If not, the procedure returns back to Step S701.

(Step S715) The control data transmitting unit 78 transfers the tunnel control data received at the control data receiving unit 76 to the tunnel managing apparatus 8. The procedure is then returned to Step S701.

The flowchart of Fig. 24 can be canceled anytime by the disconnection of the power supply or the interruption of a cancel signal.

The flowchart of Fig. 25 will now be described.

(Step S801) The control data receiving unit 81 examines whether the tunnel control data demanding the start of the tunnel communication is received or not. When the tunnel control data demanding the tunnel communication is received, the procedure goes to Step S802. If not, the procedure moves to S804.

(Step S802) The data modifying unit 47 saves the tunnel communication data in response to the tunnel control data received at the control data receiving unit 81. The saving may involve production of a new record in the tunnel communication data.

(Step S803) The sustain data transmitting unit 45 refers the tunnel communication data managed by the tunnel communication data managing unit 42 and transmits the sustain data. The procedure is then returned back to Step S801.

(Step S804) The demand receiving unit 43 examines whether the demand for transmission of the sustain data is received or not. When the demand for transmission of the sustain data is received, the procedure goes to Step S805. If not, the procedure moves to Step S806.

(Step S805) The sustain data transmitting unit 45 transfers the sustain data in response to the tunnel communication data managed by the tunnel communication data managing unit 42. The procedure then returns to Step S801. The sustain data transmitted from the sustain data transmitting unit 45 is about the tunnel communication conducted by the data processing apparatus from which the demand for transmission of the sustain data is dispatched to the demand receiving unit 43.

(Step S806) The control data receiving unit 81 examines whether the tunnel control data is received or not. When the tunnel control data is received, the procedure goes to Step S807. If not, the procedure returns back to Step S801.

(Step S807) The datamodifying unit 47 modifies the tunnel communication data managed by the tunnel communication data managing unit 42 according to the tunnel control data received at the control data receiving unit 81. Then, the procedure is returned back to Step S801.

The flowchart of Fig. 25 can be canceled anytime by the disconnection of the power supply or the interruption of a cancel signal.

The action of the communications system of this embodiment will further be described. The actions of the first data processing apparatus 1 and the second data processing apparatus 2 including the transmission of the transmission demand from the sustain data demanding unit 15 are equal to those of Embodiment 1 and will be explained in no more detail. In this embodiment, the actions of the access apparatus 7 and the tunnel managing apparatus 8 will mainly be described in more detail.

The steps of transferring the device identifiers of the first and second data processes apparatuses 1 and 2 to the access apparatus 7 and registering the IP address of the first data processing apparatus 1 into the user data saved in the communication controlling unit 75 of the access apparatus 7 are equal to those of Embodiment 1 and their description is omitted.

The action starts with the tunnel communication controlling unit 14 of the first data processing apparatus 1 transmitting the device identifier "D002" of the second data processing apparatus 2 and the demand for starting the tunnel communication with the second data processing apparatus 2 to the access apparatus 7. The device identifier "D002" and the demand for starting the tunnel communication are received by the communication controlling unit 75 (Step S701). The communication controlling unit 75 then accesses the user data and constructs an address data indicating the IPaddress "202.132.10.6" assignedwith the device identifier "D002". The address data is dispatched to the IP address of the first data processing apparatus 1 (Step S702). The communication controlling unit 75 supplies the control data transmitting unit 78 with the available time "300 minutes" for sustaining the tunnel communication, the device identifier "D001" of the first data processing apparatus 1 as a data for identifying the tunnel communication, and the device identifier "D002" of the second data processing apparatus 2. The control data transmitting unit 78 receives the device identifiers "D001" and "D002" and the available time "300 minutes" and constructs the tunnel control data including those information. The tunnel control data is then transmitted to the tunnel managing apparatus 8 (Step S703).

The tunnel control data is received by the control data receiving unit 81 of the tunnel managing apparatus 8 (Step S801). The tunnel control data is saved as a new record shown in Fig. 8A in the tunnel communication managing unit 42 (Step S802). The remaining of the available time in the tunnel communication data shown in Fig. 8A is counted down with time by the same manner as of Embodiment 1.

The sustain data transmitting unit 45 judges that the remaining of the available time in the tunnel communication data remains not zero and constructs and transmits the sustain data for sustaining the tunnel communication to the access apparatus 7 (Step S803).

The sustain data is received by the sustain data receiving unit 73 of the access apparatus 7 (Step S704). In turn, the sustain data is transferred from the sustain data transmitting unit 74 to the first data processing apparatus 1 which demands the start of the tunnel communication (Step S705).

Accordingly, in response to the address data received from the access apparatus 7, the tunnel communication controlling unit 14 in the first data processing apparatus 1 directs the tunnel communication unit 12 to start the tunnel communication with the second data processing apparatus 2. The sustain data transmitted from the access apparatus 7 is received by the sustain data receiving unit 13 and its reception is notified to the sustain data demanding unit 15. The sustain data demanding unit 15 then starts the counting up from 0 minute 0 second (Step S101).

When 10 minutes has elapsed after the start of the counting, the sustain data demanding unit 15 judges that the timing for demanding the transmission of the sustain data stands (Step S102) and transmits the demand for transmission of the sustain data to the access apparatus 7 (Step S103). The demand for transmission includes the command for transmission of the sustain data and the device identifier "D001". In this embodiment, the tunnel communication can be identified using the device identifier "D001" of the first data processing apparatus.

The transmission demand is then received by the demand receiving unit 71 of the access apparatus 7 (Step S706). The address data indicating the IP address of the first data processing apparatus 1 is extracted and transferred to the sustain data transmitting unit 74. The transmission demand is then transmitted from the demand transmitting unit 72 to the tunnel managing apparatus 8 (Step S707).

The transmission demand is received by the demand receiving unit 43 of the tunnel managing apparatus 8 (Step S804). The device identifier "D001" and the demand for transmission of the sustain data are transferred to the sustain data transmitting unit 45. The sustain data transmitting unit 45 refers the record in the tunnel communication data assignedwith the device identifier "D001" in the demand. When it is judged that the remaining of the available time in the record is about 290 minutes, the sustain data for sustaining the tunnel communication is transmitted to the access apparatus 7 (Step S805).

The sustain data is received by the sustain data receiving unit 73 of the access apparatus 7 and transferred to the sustain data transmitting unit 74 (Step S708). The sustain data transmitting unit 74 transmits the sustain data received from the sustain data receiving unit 73 to the IP address of the first data processing apparatus 1 which is taught by the demand receiving unit 71 (Step S709). The sustain data is also transferred to the communication controlling unit 75 where it is judged that the tunnel communication is not terminated (Step S710).

The sustain data receiving unit 13 receives the sustain data (Step S104) and judges from the sustain data that the tunnel communication is sustained (Step S105). The sustain data demanding unit 15 resets the counting action and starts another cycle of the counting (Step S102). By repeating the foregoing steps, the tunnel communication can be continued.

The action of the first data processing apparatus 1 terminating the tunnel communication when the transfer of data from the first data processing apparatus 1 to the second data processing apparatus 2 has been completed will now be described. As the transfer of data has been completed, the tunnel communication unit 12 notifies the tunnel communication controlling unit 14 of the completion of the data transfer. The tunnel communication controlling unit 14 then judges that the tunnel communication it to be terminated (Step S107) and supplies the access apparatus 7 with the demand for terminating the tunnel communication (Step S108). The demand includes the command for terminating the tunnel communication and the device identifier "D001" as a data for identifying the tunnel communication.

The communication control unit 75 receives the demand for terminating the tunnel communication (Step S711) and transfers to the control data transmitting unit 78 the demand for transmission of the tunnel control data including the demand for terminating the tunnel communication assigned with the device identifier "D001". The control data transmitting unit 78 then transfers the tunnel control data including the demand for terminating the tunnel communication assigned with the device identifier "D001" to the tunnel managing apparatus 8 (Step S712).

The tunnel control data is received by the control data receiving unit 81 of the tunnel managing apparatus 8 (Step S806) and its information assigned with the device identifier "D001" is deleted by the data modifying unit 47 (Step S807). Prior to the deleting action, the remaining of the available time is read from the tunnel communication data and transferred by a route not shown from the tunnel managing apparatus 8 to the access apparatus 7. The remaining of the available time is then overwritten and saved in the user data assigned with the user identifier "U001" shown in Fig. 7 by the communication controlling unit 75.

The action of terminating the tunnel communication when the remaining of the available time has been turned to zero will be explained. It is now assumed that the tunnel communication data is changed with time as shown in Fig. 8C. Then, the sustain data demanding unit 15 delivers the transmission demand to the access apparatus 7 (Step S103). The transmission demand is receive by the demand receiving unit 71 and transferred to the tunnel managing apparatus (Steps S706 and S707). This causes the sustain data to be transmitted by the same steps as described previously (Steps S804 and S805). In this case, the sustain data indicates that the tunnel communication is not sustained because the remaining of the available time is zero.

The sustain data is received by the sustain data receiving unit 73 of the access apparatus 7 and transferred from the sustain data transmitting unit 74 to the first data processing apparatus 1 and to the communication controlling unit 75 (Steps S708 and S709). The communication controlling unit 75 judges that the tunnel communication is to be terminated (Step S710). The control data transmitting unit 78 transmits the tunnel control data including the demand for terminating the tunnel communication assigned with the device identifier "D001" to the tunnel managing apparatus 8, using the same steps of the action as described previously (Step S712). As a result, the information in the tunnel communication data assigned with the device identifier "D001" is deleted (Steps S806 and S807). The actions of transferring the remaining zero of the available time from the tunnel managing apparatus 8 to the access apparatus 7 and setting the available time for sustaining the tunnel communication in the user data assigned with the user identifier "U001" to zero by the communication controlling unit 75 are equal to those explained above.

The action of terminating the tunnel communication from the outside will be explained. It is assumed that an illegal transfer of data through the tunnel communication between the first data processing apparatus 1 and the second data processing apparatus 2 is detected by a third party which also receives the device identifier "D001" of the first data processing apparatus 1. The third party operates its data processing apparatus connected to the communications network 3 for dispatching to the access apparatus 7 the device identifier "D001" as a data for identifying the tunnel communication and the tunnel control data including a command for terminating the tunnel communication. The tunnel control data is then received by the control data receiving unit 76 (Step S713). The modification judging unit 77 examines whether the data processing apparatus of the third party is a registered one or not. It is understood that the address of the third party which provides the tunnel control data has been registered in the modification judging unit 77. Accordingly, as it is judged that the tunnel communication data is modifiable (Step S714), the control data transmitting unit 78 transmits the tunnel control data to the tunnel managing apparatus 8 (Step S715). The tunnel control data is received by the control data receiving unit 81 of the tunnel managing apparatus 8 (Step S806). The remaining of the available time in the tunnel communication data assigned with the device identifier "D001" carried in the tunnel control data is then turned to zero by the data modifying unit 47. The remaining of the available time in the tunnel communication data assigned with the device identifier "D001" is shifted to zero as shown in Fig. 8C (Step S807). Then, at the timing when the transmission demand is received (Step S706), the sustain data for not sustaining the tunnel communication is delivered and the tunnel communication can thus be terminated (Steps S707 to S710, S712, and S804 to S807).

As described, the data processing system of this embodiment allows the tunnel communication to be controlled with the access apparatus 7 and the tunnel managing apparatus 8, thus ensuring the same advantages as of Embodiment 1. Also, since the access apparatus 7 and the tunnel managing apparatus 8 are provided, their reception of accesses from the data processing apparatuses and management of the tunnel sustaining time can be controlled separately. Alternatively, the single tunnel managing apparatus 8 may be connected with two or more of the access apparatuses 7 for permitting each of the access apparatuses 7 to provide the data processing apparatuses with its particular type of the tunnel communication.

The tunnel control data received by the control data receiving unit 76 may be a demand for extending the available time for sustaining the tunnel communication as described in Embodiment 3. In that case, the modification judging unit 77 is identical in the judging action to the modification judging unit 48 of Embodiment 3.

Although the access apparatus 7 includes the modification judging unit 77 in this embodiment, it may exclude the modification judging unit 77 and allow the control data transmitting unit 78 to supply the tunnel managing apparatus 8 with all the tunnel control data received by the control data receiving unit 76. Alternatively, the tunnel managing apparatus 8 may be arranged to include a modification judging unit for judging whether or not the tunnel communication data is to be modified in response to the tunnel control data received at the control data receiving unit 81.

Although the setting up of the communication between the first data processing apparatus 1 and the second data processing apparatus 2 (e.g., supplying the first data processing apparatus 1 with the address of the second data processing apparatus 2) is conducted by the access apparatus 7 in this embodiment, it may be carried out by the tunnel managing apparatus 8.

While a combination of the tunnel managing apparatus and the access apparatus in this embodiment replaces the tunnel managing apparatus in the communications system of Embodiment 1 according to the above description, it may also replace the tunnel managing apparatus in the communications system of Embodiment 2 or 3 with equal success.

The access apparatus 7 and/or the tunnel managing apparatus 8 in this embodiment may include a demand saving unit (which is identical to the demand saving unit 44 of Embodiment 1) for saving information about the demand for transmission of the sustain data.

The tunnel communication can be identified by, but not limited to, the device identifier of one of the connecting data processing apparatuses in this embodiment. For example, the tunnel communication may be identified by the device identifiers of two connecting data processing apparatuses or a dedicated tunnel identifier for identifying the tunnel communication. Hence, the transmission demand may include such a tunnel identifier. For saving the demand data, the device identifiers may be replaced by the tunnel identifiers. When the tunnel identifier is employed, two or more of the tunnel communicating actions from the first data processing apparatus 1 can be identified at a time.

Although the sustain data is transmitted from the tunnel managing apparatus 4 to the first data processing apparatus 1 in response to the reception of the demand for transmission of the sustain data in this embodiment, it may occasionally be dispatched from the tunnel managing apparatus 4 to the first data processing apparatus conducting the tunnel communication regardless of the transmission demand. For example, when it is judged from the tunnel communication data that the tunnel communication is not sustainable, the sustain data of not sustaining may be dispatched from the sustain data transmitting unit 45. The sustain data transmitting unit 45 may also release the sustain data according to the payment charge data carried in the tunnel communication data. The payment charge data is a data for charging the cost. For example, the remaining of the available time is purchased by the user for sustaining the tunnel communication, it may be the payment charge data. Accordingly, when the remaining of the available time in the tunnel communication data is turned to zero, the sustain data for not sustaining the tunnel communication from the sustain data transmitting unit 45 may be received by the first data processing apparatus 1. Alternatively, the sustain data may be transferred from the sustain data transmitting unit 45 to both the first data processing apparatus 1 and the second data processing apparatus 2.

Although the demand for transmission of the sustain data is transmitted from the first data processing apparatus 1 (5) to the tunnel managing apparatus 4 in the above embodiment, it may be dispatched to the tunnel managing apparatus 4 by the second data processing apparatus 2 like the first data processing apparatus 1. This allows the tunnel managing apparatus 4 to transfer the sustain data to one or both of the data processing apparatuses which conduct the tunnel communication.

In the above embodiment, the remaining of the available time in the tunnel communication data is counted down by the tunnel communication data managing unit 42. The tunnel communication data managing unit 42 is not limited to its action of counting up or down the available time. For example, while the tunnel communication data is saved in the tunnel communication managing unit 42 as shown in Fig. 14, the sustain data transmitting unit 45 may compare between the current time and the start time of the tunnel communication to examine whether or not the duration of carrying out the tunnel communication exceeds the maximum of the available time. When not, the sustain data for sustaining the tunnel communication can be released. Alternatively, using the tunnel communication data managing unit 42 of Embodiment 2, the remaining of the available time may be calculated from the time at which the tunnel communication data is updated instead of the remaining data in the tunnel communication data shown in Fig. 13.

Although the sustain data is transmitted by the sustain data transmitting unit 45 judging whether or not the tunnel communication is to be sustained in the above embodiment, it may directly be dispatched carrying the remaining time or the communication allow/disallow flag with no use of the judgment. In the latter case, the sustain data receiving unit 13 can examine whether or not the remaining time is zero or whether the communication allow/disallow flag is 1 or not to judge the sustain data for sustaining the tunnel communication.

In the above embodiment, when sustain data received by the sustain data receiving unit 13 indicates no sustaining of the tunnel communication, it is transferred to the tunnel communication controlling unit 14. Alternatively, the sustain data receiving unit 13 may transfer each sustain data received to the tunnel communication controlling unit 14 regardless of its carried information. In the latter case, the sustain data transmitting unit 45 supplies the first data processing apparatus 1(5) with the sustain data, when the tunnel communication is sustainable. When the tunnel communication controlling unit 14 fails to receive any other sustain data after a given length of time from the reception of the sustain data at the sustain data receiving unit 13, it can terminate the tunnel communication.

Although the management of the tunnel communication is based on the available time or the remaining of the available time for sustaining the communication in the above embodiment, it may be on the basis of a number of time slices. For example, as 100 slices of time are provided, each slice may be set with a predetermined length of time (one slice=10 minutes). Alternatively, the slice may be other than time slice. For example, the slice is equal to 10000 counts as is determined by a desired clock frequency. Moreover, the slice may be varied depending on the time of a day. For example, one slice is 30 minutes at night while 10 minutes in the day time.

Also, the first data processing apparatus 1(5) and the second data processing apparatus 2 in any embodiment may be connected to the communications network 3 by a communication controller (such as a router) which has the NAT (network address translation) function, In this case, the demand receiving unit 43 may receive the IP address of the communication controller but not the IP address of the first data processing apparatus 1 while the sustain data transmitting unit 45 supplies the communication controller with the sustain data. The sustain data is received by the communication controller and then transferred to the first data processing apparatus 1.

In the above embodiment, the IP address of the second data processing apparatus 2 is delivered to the first data processing apparatus 1 by, but not limited to, the action of the tunnel managing apparatus 4 or the access apparatus 7. Alternatively, the IP address of the second data processing apparatus 2 may be received by the first data processing apparatus 1 in the form of an E-mail or a recording medium.

Although the transfer of the IP address of the second data processing apparatus 2 to the first data processing apparatus 1 is carried out upon demanding of the first data processing apparatus 1 prior to the start of the tunnel communication, it may be replaced by an action of verification between the first data processing apparatus 1 and the second data processing apparatus 2.

Also, each procedure (function) of the action may be conducted intensively by a signal device (system) or a group of discrete devices in a de-centralized process mode.

Each component in the arrangement of any embodiment may be implemented by a hardware or any software feasible component may be implemented by a software program executed for the application. More particularly, the software program is recorded in an appropriate storage medium such as a hard disk drive or a semiconductor memory and read out by the action of a program executing device such as a CPU for executing its application. For example, the action of the first data processing apparatus may be implemented by a software using the following program. The program is designed for directing a computer to conduct the sustain data receiving step of receiving the sustain data about sustaining of the tunnel communication and the tunnel communication controlling steps of controlling the tunnel communication with the use of the sustain data received at the sustain data receiving step.

The tunnel managing apparatus in the above embodiment may also be implemented by a program as the software. For example, the program is designed for making a computer to execute the sustain data transmitting step of transmitting the sustain data about sustaining of the tunnel communication to the data processing apparatus conducting the tunnel communication in response to the tunnel communication data which indicates the tunnel communication between two or more of the data processing apparatuses.

The tunnel managing apparatus in the above embodiment may also be implemented by a program as the software. For example, the program is designed for making a computer to execute the sustain data transmitting step of transmitting the sustain data about sustaining of the tunnel communication in response to the tunnel communication data which indicates the tunnel communication between two or more of the data processing apparatuses.

Alternatively, the program may be modified for making the computer to execute the demand receiving step of receiving the demand for transmission of the sustain data so that the sustain data can be transmitted at the sustain data transmitting step when the transmission demand is received at the demand receiving step.

The access apparatus may also be implemented by a program as the software. For example, the program is designed for making a computer to execute the demand receiving step of receiving the demand for transmission of the sustain data about sustaining of the tunnel communication between two or more of the data processing apparatus, the demand transmitting step of transferring the demand for transmission of the sustain data when the transmission demand is received, the sustain data receiving step of receiving the sustain data, and the sustain data transmitting step of transferring the sustain data when the sustain data is received.

In the programs, the transmitting step of transmitting the data and the receiving step of receiving the data exclude the functions which are executed by the hardware, such as a modem function or an interface card function (a hardware-dependent function) at the transmitting step.

The programs may be downloaded from a server or retrieved from a storage medium (e.g., an optical disk such as CD-ROM, a magnetic disk, or a semiconductor memory).

For executing the programs, one or more of the computers may be used. In other words, either the centralized process or the de-centralized process may be employed.

### Industrial Applicability

As set forth above, the communications system of the present invention has an advantage of controlling the communication with no use of communication controllable servers and can be utilized as a system for permitting the tunnel communication.

## Claims

1. A communications system comprising a first data processing apparatus, a second data processing apparatus, and a tunnel managing apparatus,
the first data processing apparatus including:
a first tunnel communication unit for conducting a tunnel communication;
a sustain data receiving unit for receiving a sustain data for sustaining the tunnel communication; and
a tunnel communication controlling unit for controlling the tunnel communication conducted by the first tunnel communication unit with the sustain data received by the sustain data receiving unit,
the second data processing apparatus including:
a second tunnel communication unit for conducting the tunnel communication with the first data processing apparatus, and
the the tunnel managing apparatus including:
a tunnel communication data managing unit for managing a tunnel communication data about the tunnel communication between the first data processing apparatus and the second data processing apparatus; and
a sustain data transmitting unit for transmitting the sustain data to the first data processing apparatus in response to the tunnel communication data.

2. A data processing apparatus comprising:
a tunnel communication unit for conducting a tunnel communication;
a sustain data receiving unit for receiving a sustain data for sustaining the tunnel communication; and
a tunnel communication controlling unit for controlling the tunnel communication conducted by the first tunnel communication unit with the sustain data received by the sustain data receiving unit.

3. A data processing apparatus according to claim 2, further comprising:
a sustain data demanding unit for demanding transmission of the sustain data, wherein
the sustain data received by the sustain data receiving unit is transmitted when demanded by the sustain data demanding unit.

4. A data processing apparatus according to claim 3, wherein the sustain data demanding unit demands the transmission of the sustain data at intervals of a predetermined time.

5. A data processing apparatus according to claim 3 or 4, wherein
the sustain data carries a tunnel sustaining time data indicative of the tunnel sustaining time for sustaining the tunnel communication, and
the sustain data demanding unit demands the transmission of the sustain data in response to the tunnel sustaining time data in the sustain data received by the sustain data receiving unit.

6. A data processing apparatus according to any of claims 2 to 4, wherein the tunnel communication controlling unit terminates the tunnel communication conducted by the tunnel communication unit when the sustain data receiving unit receives the sustain data indicating that the tunnel communication is no more sustained.

7. A data processing apparatus according to any of claims 2 to 4, further comprising:
a tunnel control data transmitting unit for transmitting a tunnel control data for demanding an extension of the available time in which the tunnel communication is sustained.

8. A tunnel managing apparatus comprising:
a tunnel communication data managing unit for managing a tunnel communication data about a tunnel communication between two or more processing apparatuses; and
a sustain data transmitting unit for transmitting a sustain data for sustaining the tunnel communication to the apparatus conducting the tunnel communication in response to the tunnel communication data.

9. A tunnel managing apparatus comprising:
a tunnel communication data managing unit for managing a tunnel communication data about a tunnel communication between two or more processing apparatuses; and
a sustain data transmitting unit for transmitting a sustain data for sustaining the tunnel communication in response to the tunnel communication data.

10. A tunnel managing apparatus according to claim 8 or 9, further comprising:
a demand receiving unit for receiving a demand for transmission of the sustain data, wherein
the sustain data transmitting unit transmits the sustain data in response to the demand for transmission of the sustain data received by the demand receiving unit.

11. A tunnel managing apparatus according to claim 10, further comprising a demand saving unit for saving the demand for transmission of the sustain data received by the demand receiving unit.

12. A tunnel managing apparatus according to claim 8 or 9, wherein, the tunnel sustain data transmitting unit transmits the sustain data for not sustaining the tunnel communication when it is judged from the tunnel communication data that the tunnel communication is no more sustained.

13. A tunnel managing apparatus according to claim 8 or 9, wherein
the tunnel communication data carries a data for charging the payment of the tunnel communication and
the sustain data transmitting unit transmits the sustain data in response to the data for charging the payment.

14. A tunnel managing apparatus according to claim 8 or 9, further comprising:
a control data receiving unit for receiving a tunnel control data for controlling the tunnel communication; and
a data modifying unit for modifying the tunnel communication data managed by the tunnel communication data managing unit in accordance with the tunnel control data.

15. A tunnel managing apparatus according to claim 14, further comprising:
a modification judging unit for judging from the tunnel control data whether or not the tunnel communication data is to be modified when the control data receiving unit receives the tunnel control data,
wherein
the data modifying unit modifies the tunnel communication data in accordance with the tunnel control data when the modification judging unit judges that the tunnel communication data is to be modified.

16. A tunnel managing apparatus according to claim 14, wherein the tunnel control data is a data for demanding an extension of the available time in which the tunnel communication is sustained.

17. A data processing system comprising a tunnel managing apparatus and an access apparatus,
the access apparatus including:
a first demand receiving unit for receiving a demand for transmission of a sustain data for sustaining a tunnel communication between two or more processing apparatuses;
a demand transmitting unit for transmitting the demand for transmission to the tunnel managing apparatus when the first demanding receiving unit receives the demand for transmission;
a sustain data receiving unit for receiving the sustain data transmitted from the tunnel managing apparatus; and
a first sustain data transmitting unit for transmitting the sustain data when the sustain data receiving unit receives the sustain data, and
the tunnel managing apparatus including:
a tunnel communication data managing unit for managing a tunnel communication data about the tunnel communication;
a second demand receiving unit for receiving the demand for transmission from the access apparatus; and
a second sustain data transmitting unit for transmitting the sustain data to the access apparatus in response to the tunnel communication data when the second demand receiving unit receives the demand for transmission.

18. A data processing system according to claim 17,
wherein
the access apparatus further includes:
a control data receiving unit for receiving a tunnel control data about controlling the tunnel communication; and
a control data transmitting unit for transmitting the tunnel control data to the tunnel managing apparatus when the control data receiving unit receives the tunnel control data, and
the tunnel managing apparatus further includes:
a control data receiving unit for receiving the tunnel control data transmitted from the access apparatus; and
a data modifying unit for modifying the tunnel communication data managed by the tunnel communication data managing unit in accordance with the tunnel control data.

19. A data processing system according to claim 17 or 18, further comprising:
a modification judging unit for judging from the tunnel control data whether or not the tunnel communication data is to be modifiedwhen the control data receiving unit receives the tunnel control data,
wherein
the control data transmitting unit transmits the tunnel control data to the tunnel managing apparatus when the modification judging unit judges that the tunnel communication data is to be modified.

20. A data processing system according to claim 17 or 18, wherein the tunnel control data is a data for demanding an extension of the available time in which the tunnel communication is sustained.

21. A tunnel managing apparatus provided in the data processing system defined in claim 17 or 18.

22. An access apparatus provided in the data processing system defined in claim 17 or 18.

23. A data processing method comprising:
a sustain data receiving step of receiving a sustain data for sustaining a tunnel communication; and
a tunnel communication controlling step of controlling the tunnel communication in response to the sustain data received at the sustain data receiving step.

24. A tunnel managing method comprising:
a sustain data transmitting step of transmitting a sustain data for sustaining a tunnel communication to the apparatus conducting the tunnel communication in response to a tunnel communication data about a tunnel communication between two or more apparatuses.

25. A tunnel managing method comprising:
a sustain data transmitting step of transmitting a sustain data for sustaining a tunnel communication in response to a tunnel communication data about a tunnel communication between two or more apparatuses.

26. A tunnel managing method according to claim 25, further comprising:
a demand receiving step of receiving a demand for transmission of the sustain data, wherein
the sustain data is transmitted at the sustain data transmitting step when the demand for transmission is received at the demand receiving step.

27. A data processing method comprising:
a demand receiving step of receiving a demand for transmission of a sustain data for sustaining a tunnel communication between two or more apparatuses;
a demand transmitting step of transmitting the demand for transmission when the demand for transmission is received at the demand receiving step;
a sustain data receiving step of receiving the sustain data; and
a sustain data transmitting step of transmitting the sustain data when the sustain data is received at the sustain data receiving unit.

28. A program for making a computer to execute:
a sustain data receiving step of receiving a sustain data for sustaining a tunnel communication; and
a tunnel communication controlling step of controlling the tunnel communication in response to the sustain data received at the sustain data receiving step.

29. A program for making a computer to execute a sustain data transmitting step of transmitting a sustain data for sustaining a tunnel communication to the apparatus conducting the tunnel communication in response to a tunnel communication data about a tunnel communication between two or more apparatuses.

30. A program for making a computer to execute a sustain data transmitting step of transmitting a sustain data for sustaining a tunnel communication in response to a tunnel communication data about a tunnel communication between two or more apparatuses.

31. A program according to claim 30, further making a computer to execute a demand receiving step of receiving a demand for transmission of the sustain data, wherein
the sustain data is transmitted at the sustain data transmitting step when the demand for transmission is received at the demand receiving step.

32. A program for making a computer to exeute:
a demand receiving step of receiving a demand for transmission of a sustain data for sustaining a tunnel communication between two or more apparatuses;
a demand transmitting step of transmitting the demand for transmission when the demand for transmission is received at the demand receiving step;
a sustain data receiving step of receiving the sustain data; and
a sustain data transmitting step of transmitting the sustain data when the sustain data is received at the sustain data receiving unit.
